# EUROPÄISCHE PATENTSCHRIFT

(11) **EP 1 912 085 B1**
(45) Veröffentlichungstag und Bekanntmachung des Hinweises auf die Patenterteilung: **09.06.2010**
(21) Anmeldenummer: 08001279.2
(22) Anmeldetag: 22.04.2005
(51) Int. Cl.: G02B 6/38

(54) **Einrichtung für eine optische Steckverbindung**
Device for an optical plug connector
Dispositif pour une fiche de raccordement optique

(30) Priorität: 21.05.2004 DE 102004025512
(43) Veröffentlichungstag der Anmeldung: 16.04.2008
(62) Teilanmeldung aus: 05008841.8
(73) Patentinhaber: Neutrik Aktiengesellschaft, 9494 Schaan (LI)
(72) Erfinder: Dobler, Oliver, 6774 Tschagguns (AT); Kunkel, Peter, 9495 Triesen (LI)
(74) Vertreter: Hofmann, Ralf U.

(56) Entgegenhaltungen:
- EP-A- 1 020 743
- EP-A- 1 180 702
- EP-A- 1 331 499
- DE-A1- 10 108 783
- US-A1- 2003 063 867
- US-B1- 6 340 246

## Beschreibung

Die Erfindung betrifft eine Einrichtung für eine optische Steckverbindung mit den Merkmalen des Oberbegriffs des Patentanspruchs 1.

Zur Herstellung von optischen Verbindungen zwischen Lichtleitern werden optische Steckverbindungen eingesetzt, wobei ein Einsteckteil der optischen Steckverbindung in ein Steckeraufnahmeteil bzw. eine Steckerbuchse der optischen Steckverbindung einsteckbar ist. Herkömmliche normierte Systeme von optischen Steckverbindungen umfassen an optischen Kabeln (bzw. an optischen Adern von mehradrigen Kabeln) montierte Kabelstecker, die üblicherweise Einsteckteile der Steckverbindung bilden, und in Gerätegehäusen von Geräten mit optischen Ein- und/oder Ausgängen montierbare Chassisstecker, die meist als Steckeraufnahmeteile ausgebildet sind.

Für Chassisstecker existieren genormte Flanschverbindungen für ihre Montage in Gehäusen. Beispielsweise sind für Chassisstecker für Audioanwendungen D-Flansche weit verbreitet. Ein Chassisstecker kann als Kupplung ausgebildet sein, die sowohl an ihrer Vorderals auch an ihrer Rückseite Einstecköffnungen zur Aufnahme eines Kabelsteckers aufweist, wobei die optische Verbindung zwischen den beiden Kabeln (bzw. Adern von Kabeln), an denen die Kabelstecker angebracht sind, hergestellt wird. An der geräteinnenseitigen Rückseite des Chassissteckers kann stattdessen ein optischer Lichtleiter fix montiert sein.

Herkömmliche normierte Systeme umfassen weiters freie Kupplungen, die zur Verbindung von Kabeln mit daran angebrachten als Einsteckteile ausgebildete Kabelsteckern dienen.

Es sind verschiedene Normen für optische Steckverbindungen bekannt, beispielsweise LC-Steckverbindungen , SC-Steckverbindungen und MU-Steckverbindungen. Der Trend geht hierbei zu Steckverbindungen mit kleinen Baugrößen, zu denen insbesondere die LC-Steckverbindungen zählen.

Die genannten optischen Steckverbindungen beruhen auf dem "physical-contact"-Prinzip (auch als Stirnflächenkupplung bezeichnet), bei welchem die Enden der optischen Lichtleiter in genauer Zentrierung aneinander angelegt werden. Die Enden der optischen Fasern sind hierbei in einem zentralen Kanal eines Stifts angeordnet, der als Ferrule bezeichnet wird. Dieser Stift besteht sehr häufig aus Keramik, aber auch andere Materialien für diesen Stift sind denkbar und möglich, z.B. Metall oder eine Kombination aus Metall und Keramik. In diesem Kanal wird der optische Lichtleiter bis zum vorderen Ende des Stifts geführt. Am vorderen Ende des Keramikstifts ist der Lichtleiter geschliffen, z.B. plangeschliffen, auch Konvex- und Schrägschliffe sind üblich. Bei Single-Mode-Lichtleitern liegt der Durchmesser des Lochs normalerweise im Bereich zwischen 6 und 9 µm, bei Multi-Mode-Lichtleitern im Bereich von 60 µm. Zur Herstellung einer optischen Steckverbindung werden die endseitigen Ferrulen der beiden Lichtleiter in zentrierter Weise gegeneinandergedrückt. Zur Zentrierung der Ferrulen werden diese in Zentrierhülsen eingesteckt, die in Längsrichtung geschlitzt ausgebildet sein können (" Slit-Sleeve").

Bekannt geworden ist es auch, Lichtleiter über Linsenanordnungen optisch miteinander zu verbinden. Hierbei weitet eine Linse am Ende des ersten Lichtleiters den Strahl auf und mittels einer zweiten Linse am Eingang des zweiten Lichtleiters wird das Licht in den zweiten Lichtleiter hineinfokussiert. Derartige, weniger häufig eingesetzte optische Verbindungen, die mit vergleichsweise größeren Verlusten behaftet sind, werden auch als Linsenkoppler oder Steckverbindungen mit Strahlaufweitung bezeichnet.

Ein Problem bei optischen Steckerbindungen nach dem "physical-contact"-Prinzip stellen Verschmutzungen, insbesondere durch Staub, des Endes des optischen Lichtleiters am vorderen Ende der Ferrule dar. Es wurden daher bereits sowohl für Steckerteile als auch für Steckeraufnahmeteile von optischen Steckverbindungen aufschraubbare oder aufsteckbare Deckel zum Schutz des Endes des optischen Lichtleiters vorgeschlagen. Solche Deckel können allerdings leicht verloren gehen oder werden häufig aus Unachtsamkeit nicht aufgesetzt.

Auch können an nicht zusammengesteckten Steckverbindern austretende Lichtstrahlen, die zu Netzhautbeschädigungen führen können, Benutzer gefährden.

Ein weiteres Problem stellt die Empfindlichkeit solcher Steckverbinder gegen mechanische Beschädigungen dar. Beispielsweise sind diese Teile nicht trittsicher ausgebildet und können daher nicht auf einen begangenen Boden, beispielsweise eine Bühne gelegt werden. Im militärischen Bereich wurden bereits gegen mechanische Beschädigungen durch Gehäuse geschützte Steckverbinder eingesetzt, welche allerdings teuer sind. Auch entsprechen diese Steckverbinder nicht den herkömmlichen Normen.

Es wurden bereits Kabelstecker bereitgestellt, welche eine an der Außenseite des Gehäuses verschwenkbar gelagerte Klappe aufweisen, die beim Einstecken in ein Steckeraufnahmeteil selbsttätig geöffnet wird, indem eine Betätigungsnocke des Steckeraufnahmeteils in einen Betätigungsschlitz der Klappe eingreift. Ein solcher Kabelstecker geht beispielsweise aus der US 2 001/0043777 A1 hervor. Ein solcher Kabelstecker ist empfindlich gegenüber mechanischen Einwirkungen. Außerdem ist ein solcher Kabelstecker nicht im Zusammenhang mit den üblichen Standard-Steckeraufnahmeteilen einsetzbar, insbesondere nicht im Zusammenhang mit LC-Steckeraufnahmeteilen.

Ein Steckeraufnahmeteil bzw. Buchsenteil einer optischen Steckverbindung, welche als Staubschutz verschwenkbare Flügel aufweist, welche beim Einstecken eines Steckerteils verschwenkt werden, ist aus der EP 0 977 062 A2 bekannt. Die aus dieser Schrift bekannte Ausbildung eignet sich wiederum nicht für Steckerbuchsen, die nach den gängigen Normen ausgebildet sind, insbesondere den eine kleine Baugröße aufweisenden Normen, wie den LC-Steckern. Auch kann ein effektiver Staubschutz nicht sichergestellt werden, da ein relativ großer Luftraum zwischen den Flügeln und der vor Staub zu schützenden Ferrule vorhanden ist, in welchen leicht Verschmutzungen gelangen können.

Aus der US 6, 340,246 B1 ist eine Steckerbuchse bekannt, in die ein Kabelstecker nach dem SC-Standard einsteckbar ist. In ein Gehäuse der Steckerbuchse ist ein Einsatzteil eingesetzt, welches eine Ferrulen-Einstecköffnung aufweist, in die die Ferrule des Kabelsteckers einsteckbar ist. Weiters ist zwischen dem Gehäuse und dem Einsatzteil ein in achsialer Richtung verschiebbar geführtes Verschiebteil angeordnet. An diesem ist eine Verschlussklappe verschwenkbar gelagert, die in der vorderen Endstellung des Verschiebeteils die Ferrulen-Einstecköffnung verschließt. Beim Einstecken des Kabelsteckers wird das Verschiebeteil nach hinten verschoben, wobei die Verschlussklappe vom vorderen Ende des Einsatzteils verschwenkt wird und die Ferrulen-Einstecköffnung zum Einstecken der Ferrule freigibt. Durch die exzentrische vom Kabelstecker aufzubringende Verschiebekraft kann es hier zu einem Verkanten des Kabelsteckers beim Einstecken kommen. Für eine eine kleinere Baugröße aufweisende Norm einer optischen Steckerbindung, beispielsweise eine LC-Steckverbindung erscheint der aus der US 6,340,246 B1 bekannte Mechanismus weniger geeignet. Ein mechanischer Schutz für den Kabelstecker ist nicht vorgesehen. Auch ist der Lichtleiter des Kabelsteckers nicht gegen Verschmutzungen geschützt.

Ein Kabelstecker mit einer auf diesem montierten Schutzeinheit geht aus der US 2003/0063867 A1 hervor. Hierbei bleibt ein vorderer Abschnitt des Kabelsteckers frei zugänglich, um in ein Steckeraufnahmeteil eingesteckt zu werden. Ein vorderer Abschnitt eines Gehäuses der Schutzeinheit umgibt diesen vorstehenden Abschnitt des Kabelsteckers, um diesen zu schützen. Auf dem Gehäuse der Schutzeinheit ist ein drehbarer Ring mit einem Außengewinde angeordnet. Das Steckeraufnahmeteil weist ein Innengewinde auf, in den das Außengewinde zur Fixierung der Schutzeinheit mit dem darin angeordneten Kabelstecker im Steckeraufnahmeteil einschraubbar ist.

Aufgabe der Erfindung ist es, bei einer optischen Steckverbindung nicht nur einen Schutz des Endes des Lichtleiters für eine sich im Steckeraufnahmeteil befindende Ferrule bereitzustellen, sondern auch einen Schutz des Kabelsteckers gegen mechanische Beschädigungen zu erreichen, sofern dies die konkrete Anwendung erfordert, wobei herkömmliche, normierte und kommerziell erhältliche Kabelstecker einsetzbar sind.

Erfindungsgemäß gelingt dies durch eine Einrichtung mit den Merkmalen des Patentanspruchs 1.

Bei einer erfindungsgemäßen Einrichtung kann somit je nach Anwendungsfall der normierte Kabelstecker allein oder zusammen mit der auf ihm montierten Kabelstecker-Schutzeinheit in die mindestens eine vordere Kabelstecker-Einstecköffnung des Steckeraufnahmeteils eingesteckt werden.

Bei einer erfindungsgemäßen Einrichtung ist hierbei der Lichtleiter einer jeweiligen im Steckeraufnahmeteil angeordneten Ferrule gegen Verschmutzung geschützt, auch wenn kein Kabelstecker in die vordere Kabelstecker-Einstecköffnung an ihrer Vorderseite eingesteckt ist. Diese im Kabelstecker angeordnete Ferrule kann hierbei entweder am Ende eines fix am Steckeraufnahmeteil montierten Lichtleiters angeordnet sein oder Teil eines Kabelsteckers sein, der in eine Kabelstecker-Einstecköffnung an der Rückseite des Steckeraufnahmeteils eingesteckt worden ist.

Vorteilhafterweise kann die Kabelstecker-Schutzeinheit auch eine Kabelzugentlastungseinrichtung umfassen, wobei der Kabelstecker nicht nur gegen direkt auf ihn einwirkende Kräfte geschützt ist, sondern auch ein verbesserter Schutz gegen auf das Kabel einwirkende Kräfte erreicht wird.

Erfindungsgemäß sind für den ohne die Kabelstecker-Schutzeinrichtung eingesteckten Kabelstecker und für die mit dem Steckeraufnahmeteil zusammengesteckte Kabelstecker-Schutzeinheit, in der mindestens ein Kabelstecker montiert ist, jeweils separate Rasteinrichtungen zur Verrastung der optischen Steckerbindung vorhanden, wobei die Rasteinrichtung in ersteren Fall die herkömmlichen normierten Rastelemente des Kabelsteckers umfasst und im zweiteren Fall diese herkömmlichen normierten Rastelemente des Kabelsteckers außer Funktion gesetzt sind und mindestens ein Rastelement der Kabelstecker-Schutzeinheit mit mindestens einem zur Wechselwirkung mit diesem vorgesehenen Rastelement des Steckeraufnahmeteils zusammenwirkt.

Für elektrische Datenkabel, insbesondere RJ-45-Kabel, wie sie zur Datenübertragung in Netzwerken eingesetzt werden, ist aus der EP 1 317 025 A2 eine Steckeranordnung bekannt, durch die ein am RJ-45-Kabel montierter RJ-45-Stecker gegen mechanische Einwirkungen geschützt wird. Zur Herstellung einer elektrischen Steckverbindung ist weiters eine Steckerbuchse bzw. ein Steckeraufnahmeteil vorgesehen, in welches die Steckeranordnung einsteckbar ist, wobei eine Rasteinrichtung zur Verrastung der beiden Teile vorhanden ist. Eine optische Steckverbindung geht aus dieser Schrift nicht hervor.

Weitere Vorteile und Einzelheiten der Erfindung werden im Folgenden anhand des in der beiliegenden Zeichnung dargestellten Ausführungsbeispiels der Erfindung erläutert. In der Zeichnung zeigen:

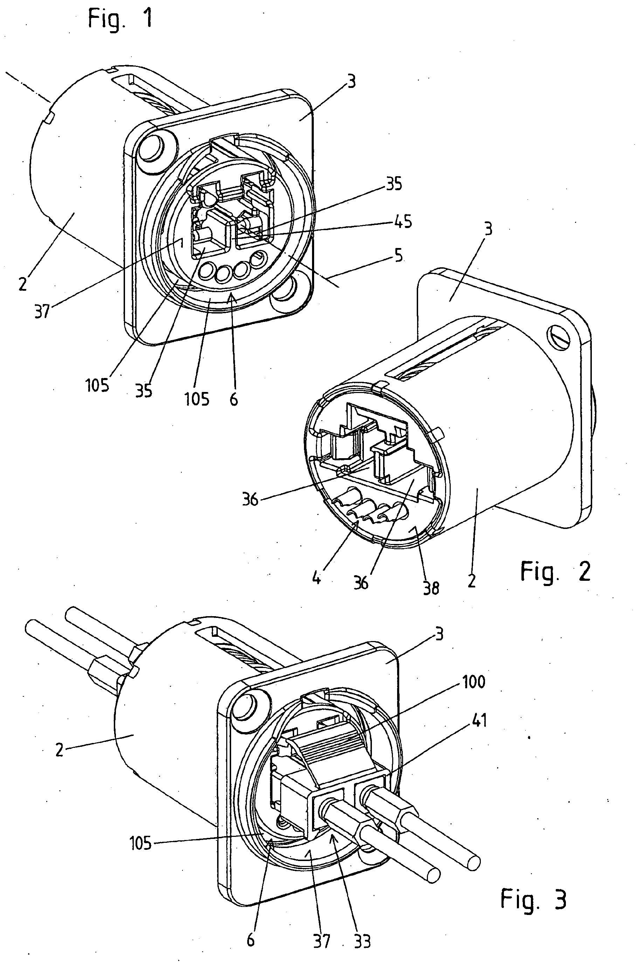

- Fig. 1: und Fig. 2 perspektivische Darstellungen aus verschiedenen Blickwinkeln eines erfindungsgemäßen Steckeraufnahmeteils;
- Fig. 3: das Steckeraufnahmeteil mit herkömmlichen, normierten darin eingesteckten Kabelsteckern;
- Fig. 4: eine perspektivische Darstellung der nach Art einer Explosionsdarstellung auseinandergezogenen Teile des Steckeraufnahmeteils;

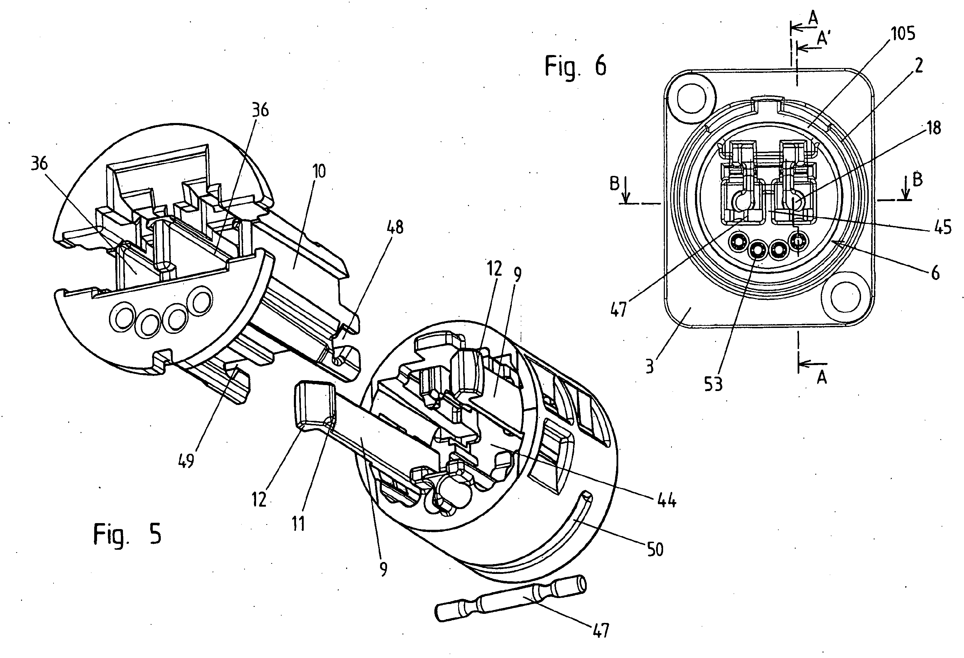

- Fig. 5: das Einsatzteil, Verschiebeteil und Blockierglied aus einem gegenüber Fig. 4 anderen Blickwinkel;
- Fig. 6: eine Vorderansicht des Steckeraufnahmeteils;
- Fig. 7: einen Schnitt entlang der Linie A-A von Fig. 6 (der im Wesentlichen durch eine optische Achse geführt ist und im Bereich des elektrischen Kontaktelements der Übersichtlichkeit halber etwas versetzt ist);
- Fig. 8: einen Schnitt entlang der Linie A-A von Fig. 6, aber mit vorder- und rückseitig eingesteckten Kabelsteckern (wobei die Kabelstecker nur in ihrer äußeren Kontur dargestellt sind);
- Fig. 9: einen Schnitt entlang der Linie A-A' von Fig. 6 (zur Verdeutlichung der Zwangsführung der Verschlussklappe), im Zustand, in welchem sich das Steckeraufnahmeteil bei einem in die Einstecköffnung an der Vorderseite eingesteckten Kabelstecker befindet, aber ohne den Kabelstecker;
- Fig. 10 und Fig. 11: das Einsatzteil und das Verschiebeteil im Schnitt entlang der Linie A-A von Fig. 6;
- Fig. 12: einen Schnitt entlang der Linie B-B von Fig. 6;
- Fig. 13 und Fig. 14: perspektivische Darstellungen der Verschlussklappe und der Betätigungselemente (die einteilig mit dem Verschiebeteil ausgebildet sind), aus verschiedenen Blickrichtungen, in Fig. 13 im gegenseitigen Eingriff und in Fig. 14 auseinandergezogen;
- Fig. 15: eine perspektivische Darstellung eines herkömmlichen normierten Kabelsteckers in Form eines LC-Kabelsteckers;
- Fig. 16: eine perspektivische Darstellung der auf einem Kabelstecker montierten Kabelstecker-Schutzeinheit;
- Fig. 17: eine Vorderansicht der Kabelstecker-Schutzeinheit;
- Fig. 18: einen Schnitt entlang der Linie A-A' von Fig. 17 (der im Wesentlichen durch eine optische Achse geführt ist und im Bereich des elektrischen Kontaktelements etwas nach außen versetzt ist);
- Fig. 19: einen Schnitt entlang der Linie A-A von Fig. 17 (durch eine optische Achse), wobei die Einheit im in ein Steckeraufnahmeteil eingesteckten Zustand dargestellt ist, aber ohne das Steckeraufnahmeteil;
- Fig. 20: eine perspektivische Darstellung der entlang der Linie A-A von Fig. 17 aufgeschnittenen Einheit, im Zustand entsprechend Fig. 19;
- Fig. 21: eine perspektivische Darstellung der nach Art einer Explosionsdarstellung auseinandergezogenen Teile der Kabelstecker-Schutzeinheit;
- Fig. 22: eine perspektivische Darstellung des Verschiebeteils, der Verschlussklappe und der die Verschlussklappe beaufschlagenden Feder in einer perspektivischen Explosionsdarstellung von schräg hinten;
- Fig. 23: die Fixiereinheit und das Verschiebeteil mit der daran verschwenkbar gelagerten Verschlussklappe im auseinandergezogenen Zustand der beiden Baueinheiten in einer perspektivischen Ansicht von schräg hinten;
- die Fig. 24 bis 27: perspektivische Darstellungen zur Erläuterung der Montage und der Kabelzugentlastungseinrichtung;
- Fig. 28: das Steckeraufnahmeteil und die auf zwei Kabelsteckern montierte KabelsteckerSchutzeinheit im zusammengesteckten Zustand, im Schnitt (Schnittlinie A-A von Fig. 6 bzw. A-A' von Fig. 17), wobei in das Steckeraufnahmeteil rückseitig Kabelstecker eingesteckt sind.

Das in den Fig. dargestellte Steckeraufnahmeteil 1, welches im gezeigten Ausführungsbeispiel als Chassisstecker ausgebildet ist, besitzt ein Gehäuse 2, das in einem herkömmlichen D-Flansch-Ausschnitt montierbar ist. Es besitzt hierzu einen geeigneten Außendurchmesser und einen Schraubenlöcher aufweisenden Montageflansch 3.

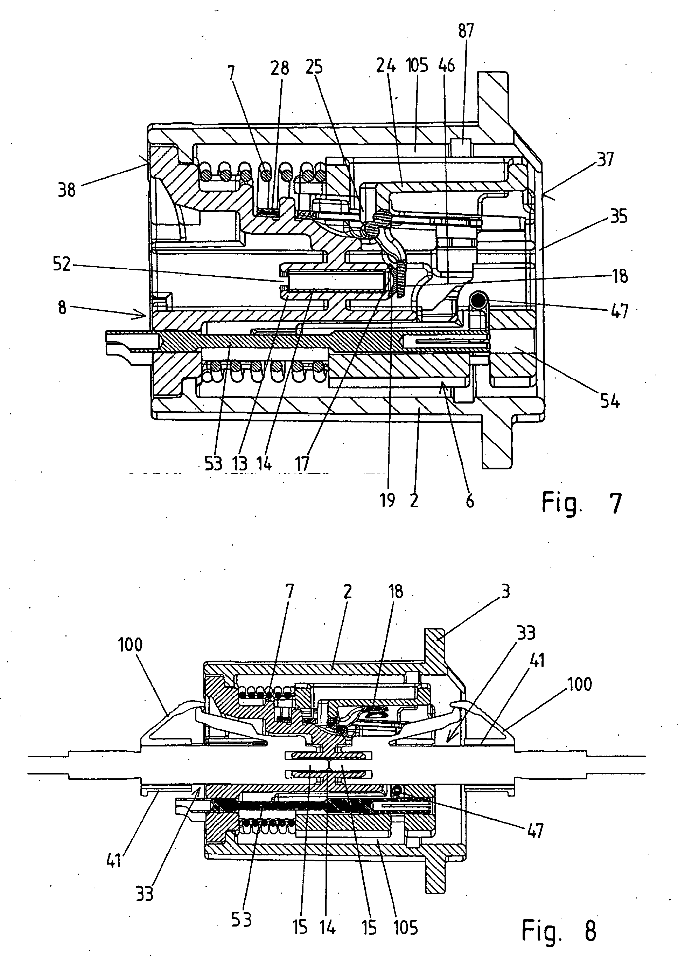

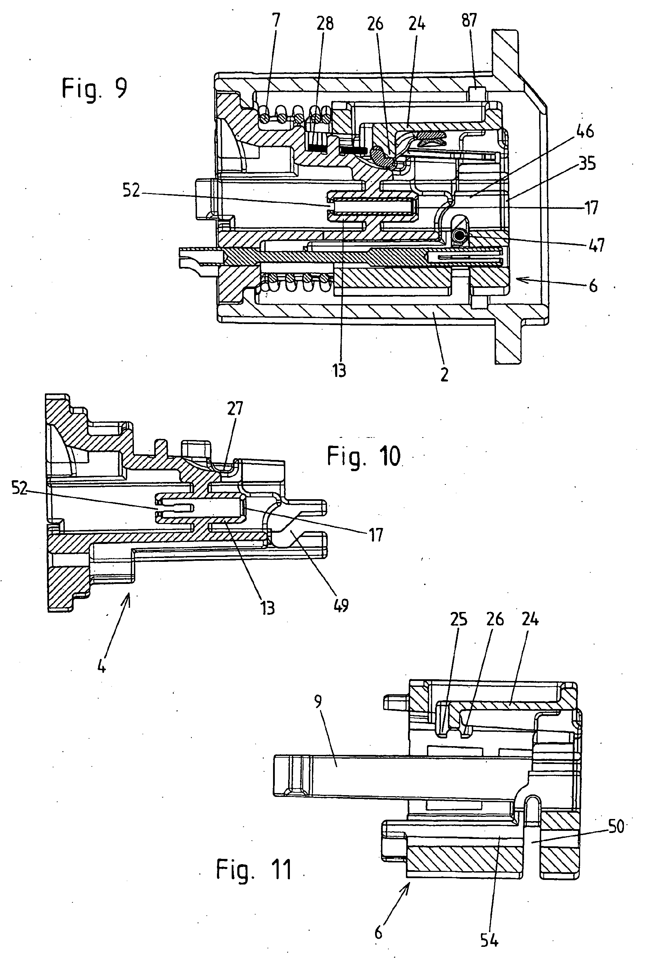

Im Gehäuse 2 ist ein gegenüber dem Gehäuse 2 unverschiebbares Einsatzteil 4 und ein gegenüber dem Gehäuse 2 und dem Einsatzteil 4 in Richtung der Längsachse 5 des Gehäuses 2 zwischen einer vorderen Verschiebeposition (Fig. 7) und einer hinteren Verschiebeposition (Fig. 8 und 9) verschiebbares Verschiebeteil 6 eingesetzt. Das Verschiebeteil 6 ist durch eine in Form einer Schraubenfeder ausgebildete Feder 7, die sich einerseits am Federanschlag 8 des Einsatzteils 4 andererseits am Verschiebeteil 6 abstützt, in seine vordere Verschiebeposition entsprechend Fig. 7 beaufschlagt.

Das Verschiebeteil 6 besitzt zwei nach hinten sich erstreckende Arme 9, die zur achsialen Führung des Verschiebeteils 6 in Längsnuten 10 des Einsatzteils 4 liegen und im Bereich ihrer freien Enden nach innen ragende Nasen aufweisen, die mit einer nach hinten gerichteten Fläche des Einsatzteils 4 am rückseitigen Ende der Längsnuten 10 zusammenwirken und Anschläge 11 zur Begrenzung der Verschiebung des Verschiebeteils 6 nach vorne bilden. Die Arme 9 besitzen weiters im Bereich ihrer freien Enden nach außen abstehende Nasen, die Montageanschläge 12 für das rückseitige Ende der Feder 7 beim Montagevorgang des Steckeraufnahmeteils 1 bilden. Die Feder 7 kann dadurch auf dem Verschiebeteil 6 montiert werden, bevor das Verschiebeteil 6 auf dem Einsatzteil 4 aufgesteckt worden ist. Die Arme 9 weisen eine ausreichende Elastizität auf, um bei der Montage des Steckeraufnahmeteils die Anschläge 11 über das Einsatzteil 4 führen zu können und die Feder 7 über die Montageanschläge 12 führen zu können.

Das Einsatzteil 4 weist zwei Lagerhülsen 13 auf, in die Zentrierhülsen 14 eingesetzt sind. Die Zentrierhülsen 14 dienen in herkömmlicher Weise zur Zentrierung der Ferrulen 15, welche die Enden der zu verbindenden Lichtleiter aufnehmen. Die Zentrierhülsen können in herkömmlicher Weise längsgeschlitzt ausgebildet sein (= "Slit-Sleeve").

Am Einsatzteil 4 ist eine Verschlussklappe 16 verschwenkbar gelagert, wobei sie zwischen einer aktiven Stellung, in der sie eine vordere Ferrulen-Einstecköffnung 17 der Zentrierhülse 14 verschließt und einer diese Ferrulen-Einstecköffnung 17 freigebenden passiven Stellung verschwenkbar ist. Die Verschlussklappe 16 weist zum Verschluss einer jeweiligen Ferrulen-Einstecköffnung ein Verschlussteil 18 auf, an dem eine Dichtung 19 aus einem elastischen Material angeordnet ist, welches die Ferrulen-Einstecköffnung 17 in der aktiven Stellung der Verschlussklappe 16 staubdicht abdichtet.

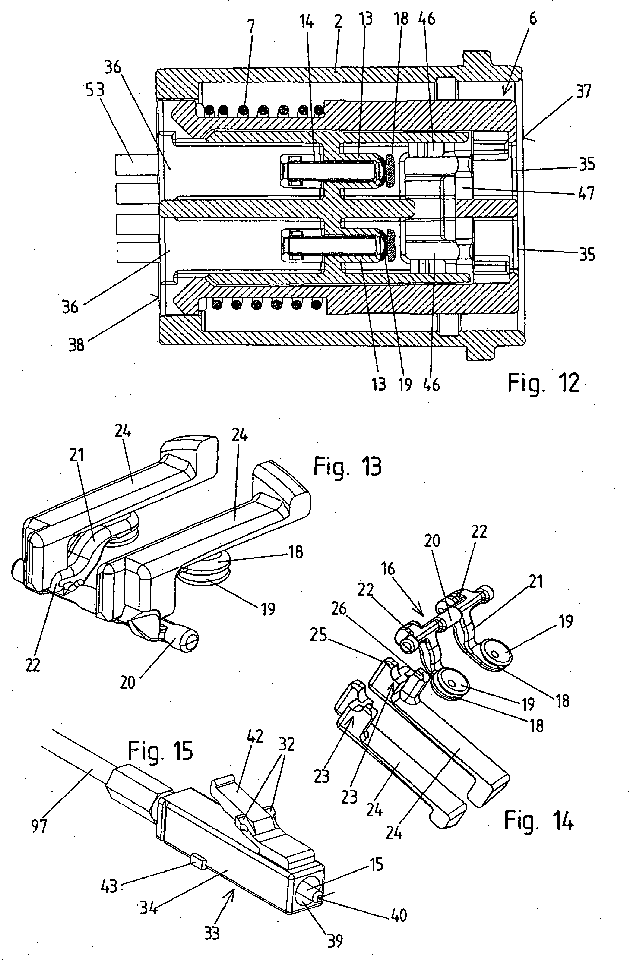

Im gezeigten Ausführungsbeispiel besitzt die Verschlussklappe 16 zwei zweiarmige Hebel, die an einem gemeinsamen, die Schwenkachse bildenden Achsbolzen 20 angeordnet sind. Der jeweilige erste Hebelarm 21 des Hebels trägt das jeweilige Verschlussteil 18 und der jeweilige zweite Hebelarm 22 wirkt mit einem jeweiligen die Verschlussklappe 16 bei der Verschiebung des Verschiebeteils 6 betätigenden Betätigungselement 23 des Verschiebeteils 6 zusammen (vgl. z. B. Fig. 13 und 14). Das jeweilige Betätigungselement 23 ist hierbei gabelartig ausgebildet und an einem vom Verschiebeteil 6 sich nach hinten erstreckenden Armfortsatz 24 des Verschiebeteils 6 angebracht. Der zweite Hebelarm 22 ist zwischen den beiden Gabelfortsätzen 25, 26 eines jeweiligen Betätigungselements in beide Verschieberichtungen des Verschiebeteils 6 zwangsgeführt, wodurch die Verschlussklappe 16 zwischen ihrem aktiven und ihrem passiven Zustand verschwenkt wird.

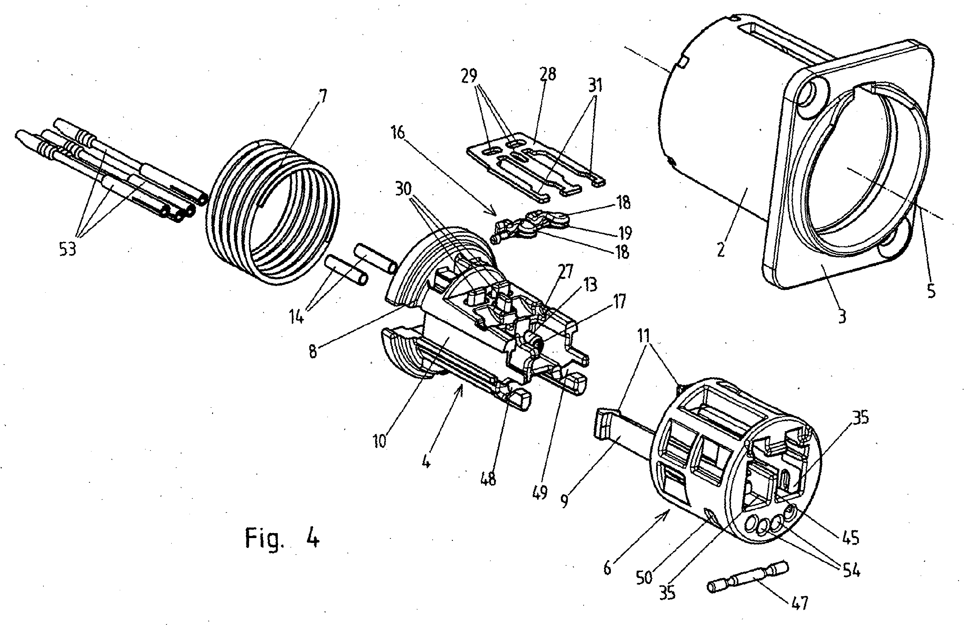

Der Achsbolzen 20 der Verschlussklappe 16 ist in Aufnahmenuten 27 des Einsatzteils 4 (Fig. 4) angeordnet und wird mittels eines die Aufnahmenuten 27 überdeckenden Halteblechs 28 in diesen gehalten. Das Halteblech 28 besitzt Ausnehmungen 29, die auf Zapfen 30 des Einsatzteils 4 aufgesteckt sind.

Im Halteblech 28 sind weiters nutartige Rastelemente 31 angeordnet, in welche nasenartige Rastelemente 32 eines Kabelsteckers 33 (Fig. 15) einrastbar sind, wie weiter unten beschrieben.

Grundsätzlich wäre es auch denkbar und möglich, jeder Ferrulen-Einstecköffnung 17 eine eigene verschwenkbar gelagerte Verschlussklappe mit einem Verschlussteil 18 zum Verschluss der Ferrulen-Einstecköffnung 17 zuzuordnen. Im Falle einer gemeinsamen Verschlussklappe 16 könnte auch nur ein einzelnes mit dieser zusammenwirkendes Betätigungselement 23 vorgesehen sein. Dieses könnte hierbei auch mit einem im Bereich zwischen den beiden Hebeln, an denen die Verschlussteile 18 angeordnet sind, am Achsbolzen 20 angeordneten Hebelfortsatz zusammenwirken.

Prinzipiell denkbar und möglich wäre es in einem anderen Ausführungsbeispiel auch, die Verschlussklappe 16 am Verschiebeteil 6 schwenkbar zu lagern. Das in diesem Fall am Einsatzteil 4 anzuordnende mindestens eine Betätigungselement würde dann auf der gleichen Seite des Achsbolzens 20, auf der das mindestens eine Verschlussteil 18 angeordnet ist, mit der Verschlussklappe zusammenwirken.

Weiters wäre es denkbar und möglich, anstelle einer Zwangsführung der Verschlussklappe 16 in beide Verschwenkrichtungen diese nur in eine Verschwenkrichtung zu betätigen und für die andere Verschwenkrichtung eine Rückstellfeder vorzusehen.

Beim gezeigten, bevorzugten Ausführungsbeispiel besitzt das Steckeraufnahmeteil an seinen beiden Stirnseiten jeweils zwei Kabelstecker-Einstecköffnungen 35, 36. Prinzipiell könnte ein erfindungsgemäßes Steckeraufnahmeteil auch mit mehr oder weniger solchen Kabelstecker-Einstecköffnungen 35, 36 ausgebildet sein. Zumindest an einer der Stirnseiten des Steckeraufnahmeteils, welche im Rahmen dieser Schrift als Vorderseite 37 bezeichnet wird, ist eine Kabelstecker-Einstecköffnung 35 vorhanden. Wenn in der gegenüberliegenden Rückseite 38 ebenfalls mindestens eine Kabelstecker-Einstecköffnung 36 vorhanden ist, so kann über das Steckeraufnahmeteil eine optische Verbindung zwischen den Lichtleitern von optischen Kabeln hergestellt werden, die an den in die Kabelstecker-Einstecköffnungen 35, 36 eingesteckten Kabelstecker 33 angeschlossen sind. Wenn an der Rückseite 38 keine Kabelstecker-Einstecköffnung 36 angeordnet ist, so kann mindestens ein Lichtleiter bereits fix am Steckeraufnahmeteil 1 montiert sein, wobei die endseitige Ferrule dieses Lichtleiters von der Rückseite des Steckeraufnahmeteils her in die Zentrierhülse 14 ragt. Auch kann direkt mindestens ein optoelektronisches Bauelement (tranceiver) an der Rückseite angebaut sein, welches direkt oder unter Zwischenschaltung eines Lichtleiters mit dem mindestens einen von der Vorderseite her eingesteckten Kabelstecker zusammenwirken kann. Die Ferrule des mindestens einen von der Vorderseite eingesteckten Kabelsteckers wird hierbei wiederum in eine jeweilige Zentrierhülse eingesteckt.

In die Kabelstecker-Einstecköffnungen 35, 36 sind normierte Kabelstecker 33 einsteckbar, die im gezeigten Ausführungsbeispiel als LC-Stecker ausgebildet sind. In Fig. 15 ist ein solcher herkömmlicher Kabelstecker 33 in Form eines LC-Steckers dargestellt, der ein Steckerteil einer optischen Steckverbindung bildet. Der Kabelstecker 33 besitzt ein Gehäuse 34 mit einer am vorderen (=steckerseitigen) Ende angeordneten Öffnung 39, aus der eine Ferrule 15 herausragt. Die Ferrule 15 besitzt in herkömmlicher Weise einen durchgehenden Längskanal, in den der Endabschnitt des Lichtleiters ragt, dessen stirnseitiges, poliertes Ende 40 bündig mit dem freien Ende der Ferrule 15 abschließt. Der Lichtleiter ist dem Kabelstecker 33 durch eine optische Ader 97 zugeführt, wobei mehrere solche Kabeladern zu einem Kabel zusammengefasst sein können. Hierbei kann das Kabel je nach Anwendungsfall neben optischen Adern auch elektrische Adern aufweisen, wodurch ein "Hybridkabel " gebildet wird.

Die Ferrule 15 ist in herkömmlicher Weise in achsialer Richtung federnd gelagert. Am Gehäuse 34 ist ein elastischer Rastarm 42 angeordnet, der beidseitig abstehende nasenartige Rastelemente 32 aufweist. Das Gehäuse 34 weist weiters in einem Bereich hinter seiner Längsmitte beidseitig abstehende Nasen 43 auf. Ein in Einsteckrichtung vor diesen Nasen 43 sich befindender vorderer Abschnitt des Gehäuses 34 ist in die Kabelstecker-Einstecköffnung 35, 36 zur Herstellung der optischen Verbindung einsteckbar.

Die an der Vorderseite 37 des Steckeraufnahmeteils 1 sich befindenden Kabelstecker-Einstecköffnungen 35 sind im Verschiebeteil 6 angeordnet. Die Kabelstecker-Einstecköffnungen 35 werden hierbei von der vorderen Mündung eines das Verschiebeteil 6 durchsetzenden Kanals 44 gebildet. Im gezeigten Ausführungsbeispiel sind die Kabelstecker-Einstecköffnungen 35 nicht vollständig, sondern nur teilweise durch einen Mittelsteg 45 voneinander abgegrenzt. Prinzipiell wäre es auch denkbar und möglich, die Kabelstecker-Einstecköffnungen 35 vollständig voneinander abzugrenzen und zwei getrennte das Verschiebeteil 6 durchsetzende Kanäle 44 auszubilden. Im gezeigten Ausführungsbeispiel sind die beiden Kanäle bis zu ihren vorderen Mündungen zu einem gemeinsamen Kanal 44 verbunden.

Im zusammengebauten Zustand des Einsatzteils 4 und des Verschiebeteils 6 bilden diese Teile gemeinsam einen an die jeweilige Kabelstecker-Einstecköffnung 35 anschließenden Kabelstecker-Einsteckkanal 46, dessen Seitenwände teilweise vom Verschiebeteil 6, teilweise vom Einsatzteil 4 gebildet werden. In diesen Kabelstecker-Einsteckkanal 46 ist der vordere Abschnitt des Gehäuses 34 des Kabelsteckers 33 einsteckbar, wobei die Ferrule 15 des Kabelsteckers 33 durch diesen Kabelstecker-Einsteckkanal 46 durch die Ferrulen-Einstecköffnung 17 der Lagerhülse 13 in diese und in die von ihr gelagerte Zentrierhülse 14 einsteckbar ist.

Beim Einstecken des Kabelsteckers 33 in das Steckeraufnahmeteil 1 wird das Verschiebeteil 6 von seiner vorderen in seine hintere Verschiebeposition verschoben, wobei die Verschlussklappe 16 von ihrer aktiven in ihre passive Lage verschwenkt wird. Prinzipiell wäre es denkbar und möglich, dass die Verschiebung des Verschiebeteils 6 nur dadurch erfolgt, dass der Kabelstecker 33 beim Einstecken in den Kabelstecker-Einsteckkanal 46 eine Reibungskraft überwinden muss, die größer ist als die von der Feder 7 aufgebrachte Kraft. Bevorzugt ist es aber, dass in der vorderen Verschiebeposition des Verschiebeteils 6 ein Blockierglied 47 in den Kabelstecker-Einsteckkanal ragt. Der Kabelstecker 33 ist in der vorderen Verschiebeposition des Verschiebeteils 6 nur bis zum Anschlag an dieses Blockierglied 47 in den Kabelstecker-Einsteckkanal 46 einsteckbar. Bei einer weiteren Verschiebung des Kabelsteckers 33 in die Einsteckrichtung wird zunächst das Verschiebeteil 6 in seine hintere Verschiebeposition verschoben, in der das Blockierglied den Kabelstecker-Einsteckkanal freigibt, wobei der Kabelstecker 33 vollständig eingesteckt werden kann. Es wird dadurch eine Kollision des Kabelsteckers 33 mit der Verschlussklappe 16 zuverlässig verhindert.

Das Blockierglied 47 wird im gezeigten Ausführungsbeispiel von einem Bolzen gebildet, der in einer Kulissenführung des Einsatzteils 4 geführt ist. Hierzu ragen seine beiden Enden in Kulissenbahnen 48, 49. Der Bolzen wird weiters bei der Verschiebung des Verschiebeteils 6 von diesem mitgenommen, sodass er entlang der Kulissenbahn 48, 49 verschoben wird, wobei er quer zur Verschieberichtung zwischen einer in den Kabelstecker-Einsteckkanal ragenden und einer diesen freigebenden Stellung verschoben wird. Zur Mitnahme des Bolzens durch das Verschiebeteil 6 ist im Verschiebeteil 6 ein das Blockierglied 47 aufnehmender Schlitz 50 angeordnet, der sich quer zur Verschieberichtung des Verschiebeteils 6 erstreckt, vorzugsweise senkrecht zu dieser Verschieberichtung.

Beim gezeigten Ausführungsbeispiel sind an der Rückseite des Steckeraufnahmeteils ebenfalls zwei Kabelstecker-Einstecköffnungen 36 vorhanden, die im Einsatzteil 4 angeordnet sind. Durch diese Kabelstecker-Einstecköffnungen 36 können von der Rückseite des Steckeraufnahmeteils 1 her ebenfalls die gleichen normierten Kabelstecker 33 wie auf der Vorderseite des Steckeraufnahmeteils 1 eingesteckt werden. Die Kabelstecker 33 werden hierbei durch die Kabelstecker-Einsteckkanäle 51 des Einsatzteils 4 eingesteckt, wobei ihre Ferrulen in die Ferrulen-Einstecköffnungen 52 am hinteren Ende der Lagerhülse 13 in die Zentrierhülse 14 eingesteckt werden.

Das Steckeraufnahmeteil 1 ist im gezeigten Ausführungsbeispiel somit als Zweifachkupplung für zwei optische Verbindungen von je zwei Kabeln ausgebildet. Eine Ausbildung als Einfachkupplung wäre ebenso denkbar und möglich, wobei an der Vorder- und Rückseite 37, 38 jeweils nur eine Kabelstecker-Einstecköffnung 35, 36 vorhanden wäre (ebenso nur eine Lagerhülse 13, Zentrierhülse 14 usw.).

Wenn an der Vor- bzw. Rückseite 37, 38 des Steckeraufnahmeteils zwei Kabelstecker 33 einzustecken sind, so können diese durch eine Klammer 41 miteinander verbunden sein. An dieser Klammer kann ein elastischer Betätigungsarm 100 angeordnet sein, mit dem die Rastarme 42 der beiden Kabelstecker 33 gleichzeitig betätigt werden können.

Beim gezeigten Ausführungsbeispiel ist das Steckeraufnahmeteil 1 weiters als "Hybridstecker" ausgebildet, das heißt neben einer optischen Verbindung ist auch eine elektrische Verbindung herstellbar. Zu diesem Zweck weist das Steckeraufnahmeteil elektrische Kontaktelemente 53 auf. Diese sind im Einsatzteil 4 festgelegt und ragen mit vorderen Abschnitten in Kanäle 54 im Verschiebeteil 6, wobei sie in der hinteren Verschiebeposition des Verschiebeteils 6 bis nahe zu den vorderen Enden der Kanäle 54 reichen. Diese vorderen Abschnitte der elektrischen Kontaktelemente 53 sind als Kontakthülsen ausgebildet, in welche Kontaktstifte einsteckbar sind. An der Rückseite des Steckeraufnahmeteils 1 ragen die elektrischen Kontaktelemente 53 aus diesem heraus, wobei sie endseitig als Löthülsen zum Anlöten eines elektrischen Leiters einer elektrischen Ader des Kabels ausgebildet sind.

Ein das Verschiebeteil 6 umgebender Ringspalt zwischen dem Gehäuse 2 und dem Verschiebeteil 6 bildet eine Einstecköffnung 105, in welche der vordere Abschnitt eines Gehäuses einer im Folgenden beschriebenen Kabelstecker-Schutzeinheit einsteckbar ist.

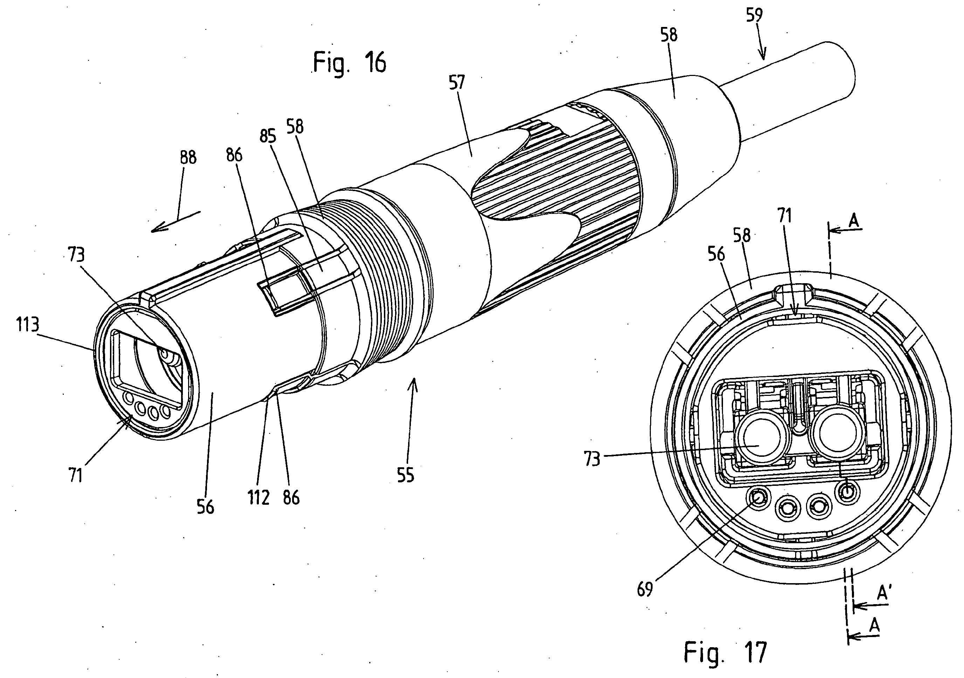

Eine Kabelstecker-Schutzeinheit 55 zur Montage auf mindestens einem Kabelstecker 33, im gezeigten Ausführungsbeispiel zwei Kabelsteckern 33, geht aus den Fig. 16 bis 28 hervor. Die Kabelstecker-Schutzeinheit 55 besitzt ein Gehäuse, welches von einer in Bezug auf die Einsteckrichtung vorderen Gehäusehülse 56 und einer Spannhülse 57 gebildet wird, die an ihrem vorderen Ende ein Innengewinde aufweist, über welches sie auf ein Außengewinde am hinteren Ende der Gehäusehülse 56 aufschraubbar ist. Am hinteren Ende der Spannhülse 57 ist eine Kabeltülle 58 aus einem elastischen Kunststoff als Knickschutz für das Kabel 59 angebracht ist.

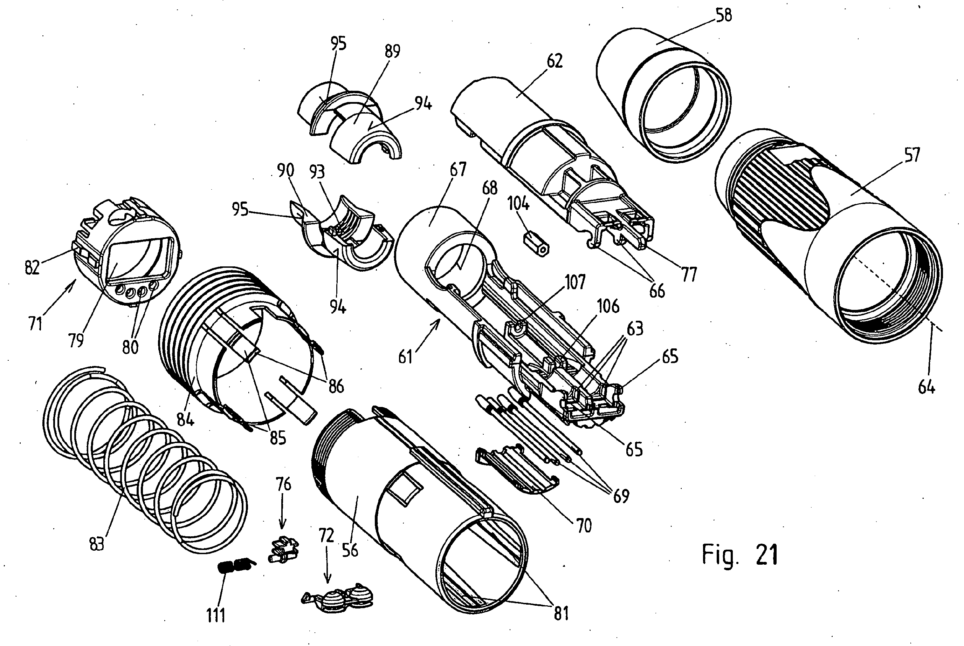

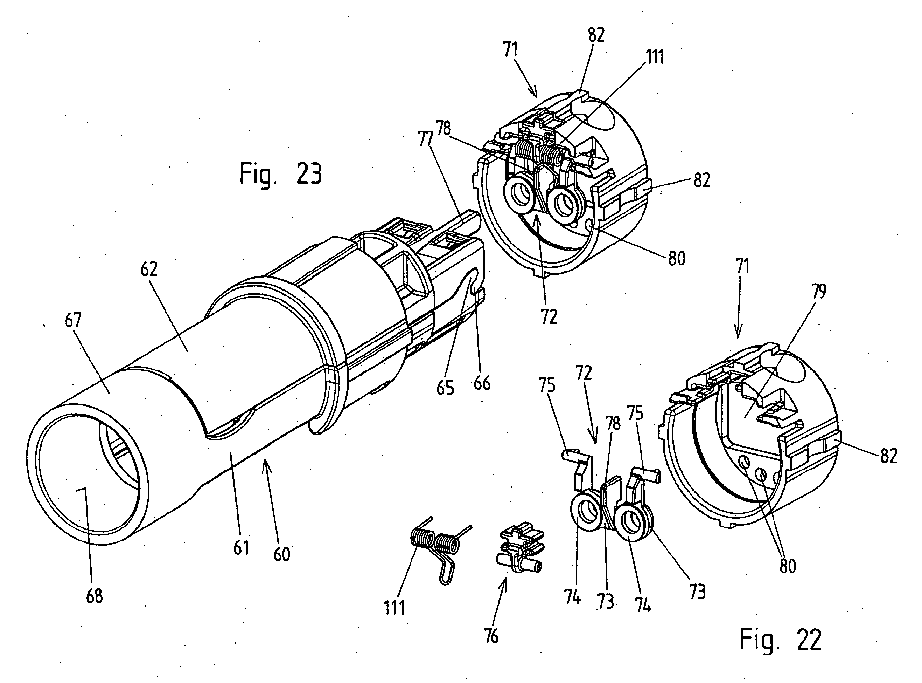

In das Gehäuse 57, 58 ist eine Fixiereinheit 60 (Fig. 23) eingesetzt, die ein Unterteil 61 und ein Oberteil 62 umfasst, zwischen welche der mindestens eine Kabelstecker 33 eingesetzt wird, im gezeigten Ausführungsbeispiel werden zwei Kabelstecker 33 eingesetzt. Im Unterteil 61 sind hierbei Nuten 63 (Fig. 21) angeordnet, welche zur Aufnahme der Nasen 43 des jeweiligen Kabelsteckers 33 dienen, wodurch die Position des Kabelsteckers 33 in Richtung der Längsachse 64 des Gehäuses 56, 57 festgelegt ist. Das Unterteil 61 und das Oberteil 62 besitzen jeweils Hakenelemente 65, 66, die vorzugsweise im Bereich der vorderen Enden des Unterteils 61 und des Oberteils 62 angeordnet sind und über die das Oberteil 62 in das Unterteil 61 einhängbar ist. Weiters ist das Oberteil vorzugsweise nach dem Zusammenführen der beiden Teile auf der den Hakenelemente 65, 66 gegenüberliegenden Seite, also im gezeigten Ausführungsbeispiel auf der Rückseite, miteinander verrastbar sind (nicht ersichtlich aus den Fig.).

Zumindest im Abschnitt, in welchem der mindestens eine Kabelstecker 33 zwischen die beiden Teile 61, 62 eingesetzt wird, sind diese halbschalenartig ausgebildet. Das Unterteil 61 weist noch einen im Bereich hinter dem Ende des Oberteils 62 liegenden hülsenartigen Abschnitt 67 auf, der eine nach innen gerichtete Fläche 68 aufweist, die sich zur Rückseite der Kabelstecker-Schutzeinheit hin konisch erweitert.

Die Begriffe "innen" und "außen" werden im Rahmen dieser Schrift unter Bezug auf die Lage relativ zur zentralen Längsachse 64 des Gehäuses 56, 57 verwendet, wobei ein weiter innen liegendes Teil näher bei der zentralen Längsachse 64 als ein weiter außen liegendes Teil liegt. Die Begriffe "vorne" und "hinten" sind auf die Einsteckrichtung bezogen, wobei ein weiter vorne liegendes Teil sich näher beim einsteckseitigen Ende 113 als ein weiter hinten liegendes Teil befindet.

In die Fixiereinheit 60 sind weiters stiftförmige elektrische Kontaktelemente 69 eingesetzt, wobei jeweils ein als Kontaktstift ausgebildeter vorderer Abschnitt des elektrischen Kontaktelements das vordere Ende der Fixiereinheit 60 nach vorne überragt. An ihren rückseitigen Enden weisen die elektrischen Kontaktelemente 69 Lötpfannen zum Anlöten eines elektrischen Leiters auf. Die elektrischen Kontaktelemente sind im Unterteil 61 angeordnet und werden von einem auf das Unterteil 61 aufgeschnappten Deckel 70 (Fig. 21) abgedeckt.

Im Gehäuse 56, 57 ist weiters ein in achsialer Richtung des Gehäuses verschiebbar geführtes Verschiebeteil 71 angeordnet, welches zwischen einer vorderen und einer hinteren Verschiebeposition verschiebbar ist. Am Verschiebeteil 71 ist eine um eine Schwenkachse verschwenkbare Abdeckklappe 72 gelagert. Diese ist durch eine Verschiebung des Verschiebeteils 71 zwischen seiner vorderen und seiner hinteren Verschiebeposition zwischen einer aktiven, die Ferrule 15 des mindestens einen Kabelsteckers 33 abdeckenden Stellung und einer passiven, die Ferrule 15 des mindestens einen Kabelsteckers 33 freigebenden Stellung verschwenkbar. Zur Abdeckung der jeweiligen Ferrule 15 dient ein jeweiliges topfartiges Abdeckteil 73, an dem eine Dichtung 74 aus einem elastomeren Material angebracht ist, welche im die Ferrule 15 abdeckenden Zustand am Gehäuse 34 des Kabelsteckers 33 im Bereich um die Öffnung 39 anliegt, wobei ein staubdicht abgeschlossener Raum gebildet wird, der das vordere Ende 40 des Lichtleiters aufnimmt.

Die verschwenkbare Lagerung der Abdeckklappe 72 am Verschiebeteil 71 geht am besten aus den Fig. 22 und 23 hervor. Die Abdeckklappe 72 besitzt zwei Achszapfen 75, die in das Verschiebeteil 71 eingeschnappt sind. Im gezeigten Ausführungsbeispiel sind die beiden Abdeckteile 73 und die Achszapfen 75 einteilig ausgebildet. Grundsätzlich wäre es auch denkbar und möglich, für jeden Kabelstecker 33 eine eigene Abdeckklappe 72 mit einem Abdeckteil 73 vorzusehen. Die Abdeckklappe 72 ist mittels einer Feder 111 in ihre aktive Stellung vorgespannt. Die Feder 111 ist mittels eines Halterungsteils 76 am Verschiebeteil 71 angebracht.

Bei der Verschiebung des Verschiebeteils 71 von seiner vorderen in seine hintere Verschiebeposition schlägt das freie Ende eines von einem nach vorne abstehenden Fortsatz der Fixiereinheit 60 gebildetes Betätigungselement 77 an einem Mittelsteg 78 der Abdeckklappe 72 an und verschwenkt diese nach oben in ihre passive Stellung.

Der jeweilige Kabelstecker 33 ist in einer Position in der Fixiereinheit 60 fixiert, in welcher sein vorderer Abschnitt, der in die Kabelstecker-Einstecköffnung 36 des Steckeraufnahmeteils 1 einsteckbar ist, über die Fixiereinheit 60 nach vorne vorsteht. Er wird hierbei von einem vorderen Gehäuseabschnitt umgeben, der von einem vorderen Teil der Gehäusehülse 56 gebildet wird.

Im in die Fixiereinheit 60 eingesetzten Zustand eines jeweiligen Kabelsteckers 33 ragt das hintere Ende seines Rastarms 42 in die Fixiereinheit 60 und wird vom Oberteil 62 der Fixiereinheit 60 gegen das Gehäuse 34 des Kabelsteckers 33 hinuntergedrückt, wodurch die von den Nasen 43 gebildeten Rastelemente des Rastarms 42 außer Funktion gesetzt sind.

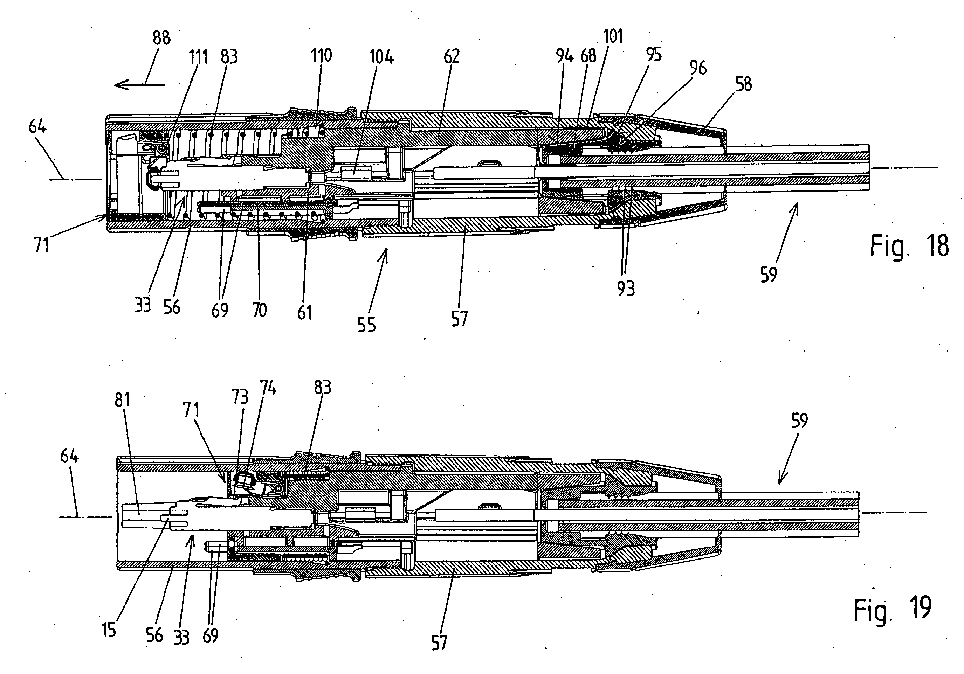

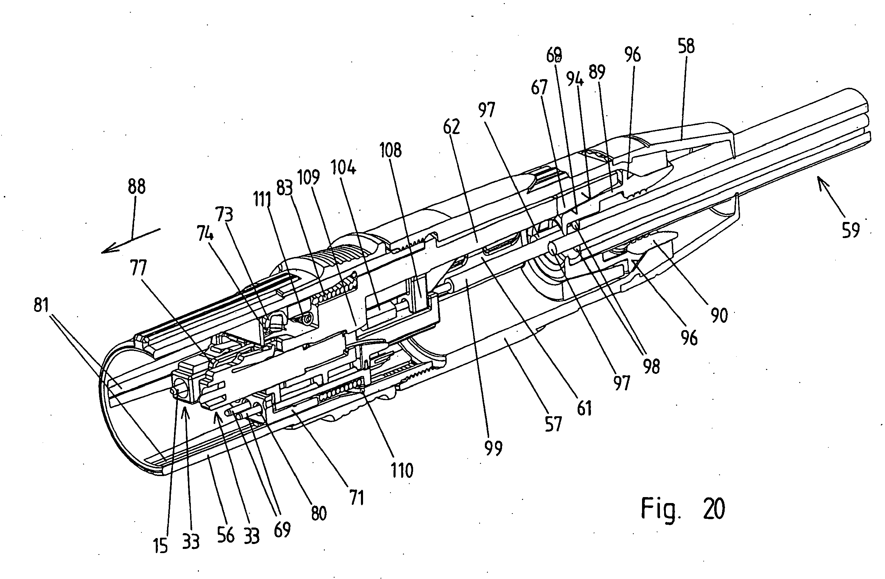

Das Verschiebeteil 71 besitzt eine Durchgangsöffnung 79. In seiner hinteren Verschiebeposition durchsetzt der jeweilige Kabelstecker 33 diese Durchgangsöffnung 79 vollständig und sein vorderer, in die Kabelstecker-Einstecköffnung 36 des Steckeraufnahmeteils 1 einzusteckender Abschnitt ragt aus dieser hervor. Weiters besitzt das Verschiebeteil 71 Durchgangsöffnungen 80 für die elektrischen Kontaktelemente 69. In der hinteren Verschiebeposition des Verschiebeteils 71 durchsetzen die elektrischen Kontaktelemente 69 diese Durchgangsöffnungen 80 vollständig und die als Kontaktstifte ausgebildeten Endabschnitte ragen aus den Durchgangsöffnungen 80 heraus (vgl. Fig. 19 und 20).

Die Führung des Verschiebeteils 71 in der Gehäusehülse 56 erfolgt über Längsnuten 81 an der Innenseite der Gehäusehülse 56 (die mit Abstand zum vorderen Ende der Gehäusehülse 56 enden) und in den Längsnuten 81 geführte Längsrippen 82 an der Außenseite des Verschiebeteils 71.

Zwischen dem Verschiebeteil 71 und der Fixiereinheit 60 ist eine als Schraubenfeder ausgebildete Feder 83 angeordnet, die das Verschiebeteil 71 in seine vordere Verschiebeposition beaufschlagt.

Es ist weiters eine Rasteinrichtung vorgesehen, um die Kabelstecker-Schutzeinheit 55 im in das Steckeraufnahmeteil 1 vollständig eingesteckten Zustand mit dem Steckeraufnahmeteil 1 zu verrasten. Hierfür geeignete Rasteinrichtungen sind bekannt, beispielsweise von elektrischen Steckverbindungen her. Im gezeigten Ausführungsbeispiel ist auf der Gehäusehülse 56 eine Zughülse 84 angeordnet. Dieser besitzt nach vorne sich erstreckende Arme 85. Die freien Enden der Arme 85 weisen nach außen abstehende als Rastelemente dienende Nasen 86 auf und wirken mit schrägstehenden Anlaufkanten 112 (Fig. 16) an der Gehäusehülse 56 zusammen.

Beim Einstecken der Kabelstecker-Schutzeinheit 55 in das Steckeraufnahmeteil 1 wird der vordere Gehäuseabschnitt der Kabelstecker-Schutzeinheit 55 in die Einstecköffnung 105 des Steckeraufnahmeteil eingesteckt, wobei die Rasteinrichtung verrastet. Im gezeigten Ausführungsbeispiel rasten hierbei die Nasen 86 in eine Nut an der Innenseite des Gehäuses 2 ein. Die Federn 7, 83 üben auf das Gehäuse 56, 57 der Kabelstecker-Schutzeinheit 55 eine entgegen der Einsteckrichtung 88 gerichtete Kraft auf, wodurch die Nasen 86 gegen die schrägen Anlaufkanten 112 der Gehäusehülse 56 gedrückt werden und dadurch im Eingriff mit der Nut 87 gehalten werden. Durch Zurückziehen der Zughülse entgegen der Einsteckrichtung 88 werden die Nasen 86 von den Anlaufkanten 112 weggezogen und können dadurch nach innen ausweichen, um außer Eingriff mit der Nut 87 zu gelangen. Die Rasteinrichtung ist dadurch gelöst.

Die Kabelstecker-Schutzeinheit weist eine Zugentlastungseinrichtung für das Kabel 59 auf. Diese umfasst eine Klemmschale, die im gezeigten Ausführungsbeispiel aus zwei voneinander getrennten Schalenteilen 89, 90 besteht, welche auf den Kabelmantel 92 von zwei gegenüberliegenden Seiten her aufgesetzt werden und im auf den Kabelmantel 92 aufgesetzten Zustand diesen umgeben. In einem anderen Ausführungsbeispiel könnten die Schalenteile 89, 90 auch beispielsweise durch ein Filmscharnier verbunden sein. Zumindest umgibt die Klemmschale 91 im aufgesetzten Zustand den Kabelmantel über seinen halben Umfang. Die Schalenteile 89, 90 weisen an ihren Innenseiten nach innen vorstehende Zacken 93 auf.

Die Klemmschale 91 besitzt eine in ihrem vorderen Bereich angeordnete nach außen gerichtete Oberfläche 94, deren Durchmesser sich von hinten nach vorne konisch verjüngt und die mit der Fläche 68 der Fixiereinheit 60 zusammenwirkt. Weiters besitzt die Klemmschale 91 eine hinter der Oberfläche 94 liegende nach außen gerichtete Oberfläche 95, deren Durchmesser sich von hinten nach vorne konisch vergrößert. Diese konische Oberfläche 95 wirkt mit einer konischen Oberfläche 96 zusammen, die an der Innenseite der Spannhülse 57 in der Nähe ihres hinteren Endes angeordnet ist.

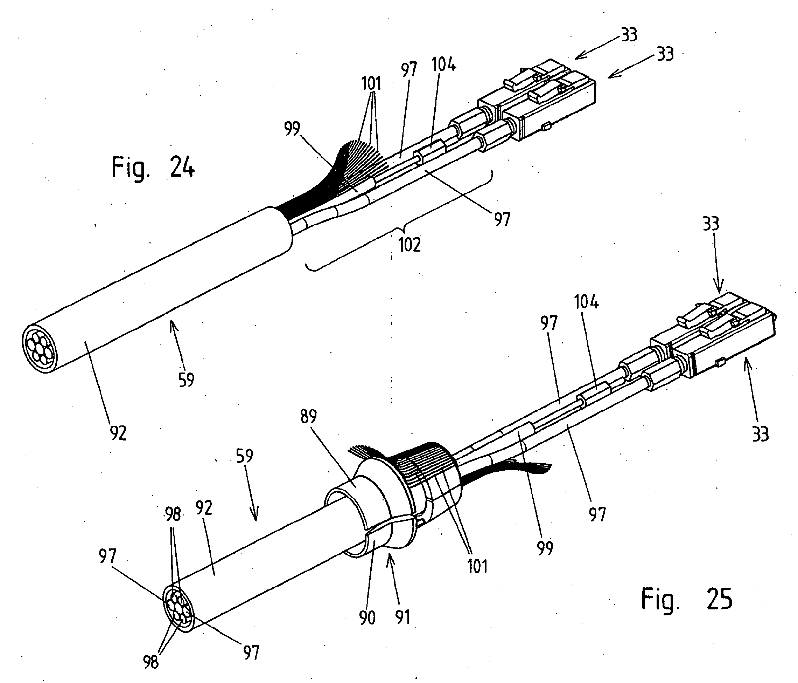

Im Folgenden wird die Montage der Komponenten erläutert. Das Kabel 59 weist im gezeigten Ausführungsbeispiel die beiden optischen Adern 97 und elektrische Adern 98 auf, im gezeigten Ausführungsbeispiel vier elektrische Adern (vgl. z. B. Fig. 24). In den Fig. 24 bis 27 sind die vorderen Abschnitte der elektrischen Adern 98 (ab dem Ende des Kabelmantels) der Übersichtlichkeit halber weggelassen. In den Fig. 18, 19, 20 sind der Übersichtlichkeit halber sowohl die optischen als auch die elektrischen Adern 97, 98 nach ihrem Austritt aus dem Kabelmantel abgeschnitten dargestellt.

Die elektrischen Adern 98 weisen in herkömmlicher Weise einen elektrischen Leiter (gebildet von einem Draht oder einer Mehrzahl von Litzen) und eine diesen umgebende Isolierung auf. Auch die optischen Adern 97 können in herkömmlicher Weise ausgebildet sein und umfassen einen Lichtleiter. Die optischen Adern 97 sind bereits an die Kabelstecker 33 angeschlossen, und zwar in einer Weise, wie dies bei der vorliegenden Steckernorm üblich ist.

Das Kabel 59 umfasst weiters ein mitgeführtes Stoßelement 99 zur Stabilisierung. Dieses weist in herkömmlicher Weise einen harten Kern (z. B. Glasfaserkern) und eine weiche Kunststoffummantelung auf. Weiters verlaufen zwischen dem Kabelmantel 92 und den Adern 97, 98 Fasern oder Fäden 101, beispielsweise Keflarfäden. Insgesamt umgeben die Fasern oder Fäden 101 die Adern 97, 98 ringförmig. An der Stelle, an der das Kabel in den Fig. 24 bis 26 geschnitten ist, sind diese Fäden der Übersichtlichkeit halber nicht dargestellt. In Fig. 24 ist aber am vorderen Ende des Kabelmantels ein Teil der aus dem Kabelmantel 92 herausragenden Fäden dargestellt. Tatsächlich sind um den gesamten inneren Umfang des Kabelmantels 92 solche Fäden 101 vorhanden.

Bei der Montage wird nun folgendermaßen vorgegangen: Das Kabel wird gerade abgeschnitten und die Spannhülse 57 mit der an ihr angebrachten Kabeltülle 58 wird auf das Kabel aufgeschoben. In der Folge wird der Kabelmantel 92 in einem Endabschnitt 102 entfernt. Im Folgenden werden in herkömmlicher Weise die Kabelstecker 33 montiert. Das Stoßelement 99 wird etwas gekürzt und in seinem Endabschnitt wird dessen Ummantelung entfernt. Auf den harten Kern 103 des Stoßelements 99 wird eine Crimphülse 104 aufgecrimpt. Die Klemmschale 91 wird auf den Kabelmantel 92 im Bereich von dessen vorderem Ende aufgesetzt. Die Kabelstecker 33 werden durch den Hülsenabschnitt 67 durchgeführt und die Klemmschale 91 wird in den Hülsenabschnitt 67 eingeschoben, wobei sich die Fasern bzw. Fäden 101 um das vordere Ende der Klemmschale 91 umlegen, wodurch sich eine Umlenkung ausbildet. Ein teil der Fäden 101 ist bereits in Fig. 25 zur Veranschaulichung im umgelegten Zustand dargestellt.

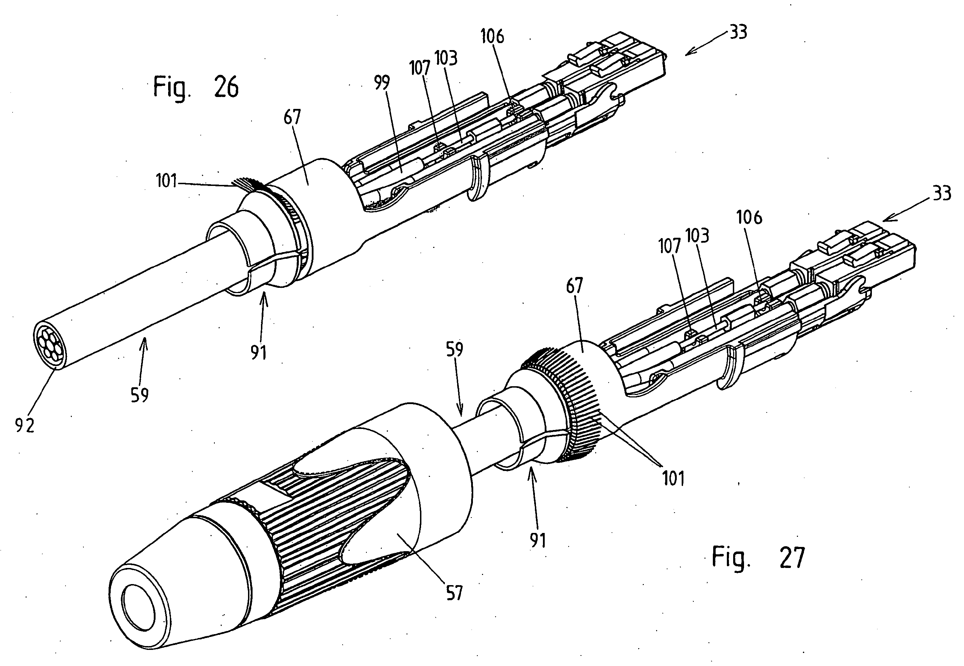

Die bereits durch den Hülsenabschnitt 67 des Unterteils 61 der Fixiereinheit 60 durchgeschobenen Kabelstecker 33 werden mit ihren Nasen 43 in die Nuten 63 eingesetzt. Der Bereich des freiliegenden Kerns 103 des Stoßelements 99 wird in die Gabeln 106, 107 des Unterteils 61 der Fixiereinheit 60 eingelegt, wobei die Crimphülse 104 im Bereich zwischen den Gabeln 106, 107 liegt, wie dies beispielsweise aus Fig. 26 ersichtlich ist. Die Enden der elektrischen Adern 98 werden abisoliert und an die elektrischen Kontaktelemente 69 angelötet. Die Spannhülse 57 wird nach Aufsetzen des Oberteils 62 der Fixiereinheit über die Fixiereinheit 60 nach vorne geschoben und auf die Gehäusehülse 56 aufgeschraubt. Hierbei legen sich die Fasern bzw. Fäden 101 um das hintere Ende des Hülsenabschnitts 67 um, wodurch sich eine zweite Umlenkung der Fäden bildet. In Fig. 27 ist diese Umlenkung zur Veranschaulichung bereits vor dem Überschieben der Spannhülse 57 dargestellt.

In die Gehäusehülse 56 wurden bereits zuvor das Verschiebeteil 71 mit der daran montierten Abdeckklappe 72 sowie die Feder 83 von hinten her eingeschoben, wobei eine letzte vergrößerte Windung der Feder 83 in eine innere Ringnut 110 der Gehäusehülse 56 einschnappt, damit sie nicht aus der Gehäusehülse 56 fallen kann, bevor der Montagevorgang abgeschlossen ist.

Es ist nunmehr der in Fig. 18 dargestellte montierte Zustand erreicht. In Fig. 18 ist hierbei nur symbolisch einer der Fäden 101 dargestellt, wobei die doppelte Umlenkung ersichtlich ist. Durch das Aufschrauben der Spannhülse 57 werden die Zacken 93 der Klemmschale 91 durch die zusammenwirkenden Flächen in den Kabelmantel gedrückt, wodurch die Verdrehsicherung des Kabels 59 erreicht wird. Durch das Aufschrauben der Spannhülse 57 wird die Klemmschale 91 weiters nach vorne gedrückt, wodurch sich die zusammenwirkenden Flächen der Klemmschale und des Abschnitts 67 aneinander anlegen und die dazwischenlaufenden Fäden geklemmt werden. Durch die bevorzugte doppelte Umlenkung der Fäden 101 wird eine besonders effektive Zugsicherung für das Kabel 59 erzielt.

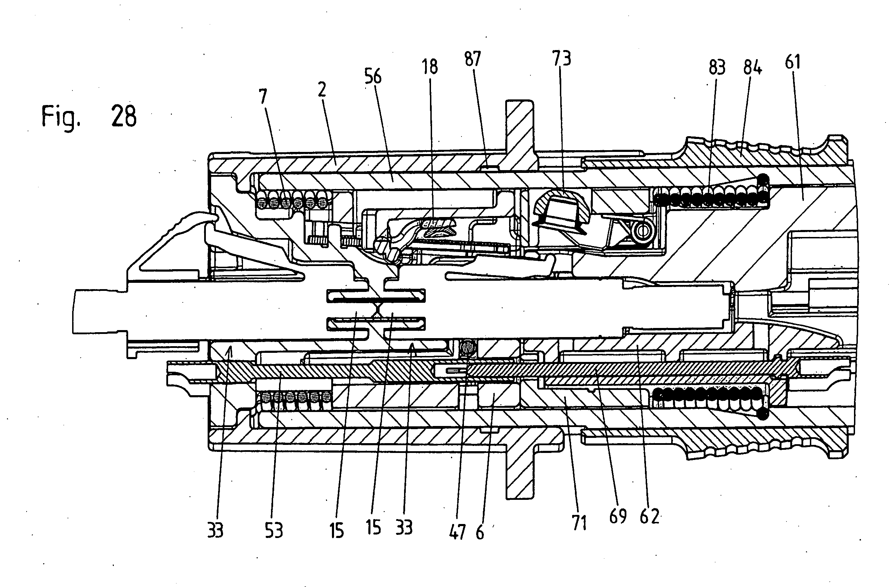

Beim Einstecken der Einheit bestehend aus Kabelstecker-Schutzeinheit 55 und Kabelsteckern 33 in das Steckeraufnahmeteil 1 wird das Verschiebeteil 71 der Kabelstecker-Schutzeinheit in die hintere Verschiebeposition entsprechend den Fig. 19 und 20 verschoben, wobei sich die Abdeckklappe 72 öffnet und die vorderen Abschnitte der Kabelstecker 33 aus dem Verschiebeteil 71 herausragen. Das Verschiebeteil 6 des Steckeraufnahmeteils 1 wird ebenfalls in die hintere Verschiebeposition entsprechend Fig. 9 verschoben, wobei sich die Verschlussklappe 16 öffnet (Verschwenkung in ihre passive Stellung). Der zusammengesteckte Zustand ist aus Fig. 28 ersichtlich, wobei auch in die jeweilige rückseitige Kabelstecker-Einstecköffnung 36 des Steckeraufnahmeteils 1 ein Kabelstecker 33 eingesteckt ist. Die Kabelstecker-Schutzeinheit 55 ist hierbei in der beschriebenen Weise mit dem Steckeraufnahmeteil 1 verrastet.

Neben den genannten Modifikationen sind unterschiedliche weitere Modifikationen des beschriebenen Ausführungsbeispiels der Erfindung denkbar und möglich, ohne den Bereich der in den folgenden Ansprüchen spezifizierten Erfindung zu verlassen.

### Legende

### zu den Hinweisziffern:

- 1: Steckeraufnahmeteil
- 2: Gehäuse
- 3: Montageflansch
- 4: Einsatzteil
- 5: Längsachse
- 6: Verschiebeteil
- 7: Feder
- 8: Federanschlag
- 9: Arm
- 10: Längsnut
- 11: Anschlag
- 12: Montageanschlag
- 13: Lagerhülse
- 14: Zentrierhülse
- 15: Ferrule
- 16: Verschlussklappe
- 17: Ferrulen-Einstecköffnung
- 18: Verschlussteil
- 19: Dichtung
- 20: Achsbolzen
- 21: erster Hebelarm
- 22: zweiter Hebelarm
- 23: Betätigungselement
- 24: Armfortsatz
- 25: Gabelfortsatz
- 26: Gabelfortsatz
- 27: Aufnahmenut
- 28: Halteblech
- 29: Ausnehmung
- 30: Zapfen
- 31: Rastelement
- 32: Rastelement
- 33: Kabelstecker
- 34: Gehäuse
- 35: Kabelstecker-Einstecköffnung
- 36: Kabelstecker-Einstecköffnung
- 37: Vorderseite
- 38: Rückseite
- 39: Öffnung
- 40: Ende des Lichtleiters
- 41: Klammer
- 42: Rastarm
- 43: Nase
- 44: Kanal
- 45: Mittelsteg
- 46: Kabelstecker-Einsteckkanal
- 47: Blockierglied
- 48: Kulissenbahn
- 49: Kulissenbahn
- 50: Schlitz
- 51: Kabelstecker-Einsteckkanal
- 52: Ferrulen-Einstecköffnung
- 53: elektrisches Kontaktelement
- 54: Kanal
- 55: Kabelstecker-Schutzeinheit
- 56: Gehäusehülse
- 57: Spannhülse
- 58: Kabeltülle
- 59: Kabel
- 60: Fixiereinheit
- 61: Unterteil
- 62: Oberteil
- 63: Nut
- 64: Längsachse
- 65: Hakenelement
- 66: Hakenelement
- 67: Abschnitt
- 68: Fläche
- 69: elektrisches Kontaktelement
- 70: Deckel
- 71: Verschiebeteil
- 72: Abdeckklappe
- 73: Abdeckteil
- 74: Dichtung
- 75: Achszapfen
- 76: Halterungsteil
- 77: Betätigungselement
- 78: Mittelsteg
- 79: Durchgangsöffnung
- 80: Durchgangsöffnung
- 81: Längsnut
- 82: Längsrippe
- 83: Feder
- 84: Zughülse
- 85: Arm
- 86: Nase
- 87: Nut
- 88: Einsteckrichtung
- 89: Schalenteil
- 90: Schalenteil
- 91: Klemmschale
- 92: Kabelmantel
- 93: Zacke
- 94: Oberfläche
- 95: Oberfläche
- 96: Oberfläche
- 97: optische Ader
- 98: elektrische Ader
- 99: Stoßelement
- 100: Betätigungsarm
- 101: Faden
- 102: Abschnitt
- 103: Kern
- 104: Crimphülse
- 105: Einstecköffnung
- 106: Gabel
- 107: Gabel
- 108: Gabel
- 109: Abdeckelement
- 110: Ringnut
- 111: Feder
- 112: Anlaufkante
- 113: einsteckseitiges Ende

## Patentansprüche

1. Einrichtung für eine optische Steckverbindung umfassend ein Steckeraufnahmeteil (1), welches zumindest an einer, eine Vorderseite (37) des Steckeraufnahmeteils darstellenden Stirnseite zumindest eine Kabelstecker-Einstecköffnung (35) aufweist, in die ein vorderer Abschnitt eines an einem optischen Kabel oder an einer optischen Ader eines Kabels angeschlossenen optischen Kabelsteckers (33), insbesondere eines LC-Kabelsteckers, zur Herstellung einer optischen Verbindung einsteckbar ist, und welches ein Gehäuse (2), ein in das Gehäuse (2) eingesetztes Einsatzteil (4), welches eine ' Ferrulen-Einstecköffnung (17) besitzt, ein im Gehäuse (2) angeordnetes, in achsialer Richtung verschiebbar geführtes Verschiebeteil (6) und mindestens eine um eine Schwenkachse verschwenkbare Verschlussklappe (16) umfasst, die durch eine Verschiebung des Verschiebeteils (6) beim Einstecken des Kabelsteckers (33) in die Kabelstecker-Einstecköffnung (35) an der Vorderseite (37) des Steckeraufnahmeteils (1) zwischen einer die Ferrulen-Einstecköffnung (17) verschließenden aktiven Stellung und einer die Ferrulen-Einstecköffnung (17) freigebenden passiven Stellung verschwenkbar ist, **dadurch gekennzeichnet, dass** die Einrichtung weiters eine auf dem mindestens einen an dem optischen Kabel oder an der optischen Ader (97) des Kabels (59) angeschlossenen optischen Kabelstecker (33) montierbare Kabelstecker-Schutzeinheit (55) umfasst, die ein Gehäuse (56, 57) und eine in des Gehäuse eingesetzte Fixiereinheit (60) aufweist, in der der mindestens eine Kabelstecker (33) in einer Position fixierbar ist, in welcher sein vorderer Abschnitt über die Fixiereinheit vorsteht, wobei ein vorderer Abschnitt des Gehäuses (56, 57) den über die Fixiereinheit (60) vorstehenden vorderen Abschnitt des Kabelsteckers (33) umgibt, dass die Kabelstecker-Schutzeinheit (55) mit dem mindestens einen darin montierten Kabelstecker (33) mit dem Steckeraufnahmeteil (1) zusammensteckbar ist, wobei der vordere Abschnitt des mindestens einen Kabelsteckers (33)zur Herstellung einer optischen Verbindung in die mindestens eine Kabelstecker-Einstecköffnung (35) an der Vorderseite (37) des Steckeraufnahmeteils (1) einsteckbar ist, dass zur Ausbildung einer Auszugsicherung für den ohne eine Montage in der Kabelstecker-Schutzeinheit (55) in das Steckeraufnahmeteil (1) eingesteckten Kabelstecker (33) das Steckeraufnahmeteil (1) mindestens ein erstes Rastelement (31) zum Verrasten mit einem Rastelement (43) des Kabelsteckers (33) aufweist und dass weiters zur Ausbildung einer Auszugsicherung für den mindestens einen in die Kabelstecker-Schutzeinheit (55) montierten und mit der Kabelstecker-Schutzeinheit (55) in das Steckeraufnahmeteil (1) eingesteckten Kabelstecker (33) das Steckeraufnahmeteil (1) weiters mindestens ein zweites Rastelement (87) und die Kabelstecker-Schutzeinheit (55) mindestens ein Rastelement (86) zum Verrasten mit dem zweiten Rastelement (87) des Steckeraufnahmeteils (1) aufweisen, wobei bei der Montage der Kabelstecker-Schutzeinheit (55) auf den mindestens einen Kabelstecker (33) das mindestens eine Rastelement (43) des Kabelsteckers (33) außer Funktion gesetzt wird.

2. Einrichtung nach Anspruch 1, **dadurch gekennzeichnet, dass** die Fixiereinheit (60) einen Rastarm (42) des Kabelsteckers, der die als Nasen (43) ausgebildeten Rastelemente des Kabelsteckers (33) aufweist, in einer niedergedrückten Position hält.

3. Einrichtung nach einem der Ansprüche 1 oder 2, **dadurch gekennzeichnet, dass** das Steckeraufnahmeteil (1) radial außerhalb des Verschiebeteils (6) eine Einstecköffnung (105) für einen vorderen Gehäuseabschnitt der Kabelstecker-Schutzeinheit (55) aufweist, die vorzugsweise als zwischen dem Verschiebeteil (6) und dem Gehäuse (2) angeordneter Ringspalt ausgebildet ist.

4. Einrichtung nach einem der Ansprüche 1 bis 3, **dadurch gekennzeichnet, dass** das Steckeraufnahmeteil (1) und die Kabelstecker-Schutzeinheit (55) jeweils mindestens ein elektrisches Kontaktelement (53, 69) aufweisen, die beim Einstecken der Kabelstecker-Schutzeinheit (55) mit dem mindestens einen darin montierten Kabelstecker (33) in das Steckeraufnahmeteil (1) zur Ausbildung einer elektrischen Verbindung miteinander in Kontakt gelangen.

5. Einrichtung nach Anspruch 4, **dadurch gekennzeichnet, dass** das mindestens eine elektrische Kontaktelement (53) des Steckeraufnahmeteils (1) im Einsatzteil (4) festgelegt ist.

6. Einrichtung nach Anspruch 5, **dadurch gekennzeichnet, dass** das mindestens eine elektrische Kontaktelement in einen Kanal (54) des Verschiebeteils (6) ragt; wobei das Verschiebeteil (6) gegenüber dem elektrischen Kontaktelement (53) verschiebbar ist.

7. Einrichtung nach einem der Ansprüche 4 bis 6, **dadurch gekennzeichnet, dass** das mindestens eine elektrische Kontaktelement (69) der Kabelstecker-Schutzeinheit (55) in der Fixiereinheit (60) festgelegt ist.

8. Einrichtung nach einem der Ansprüche 1 bis 7, **dadurch gekennzeichnet, dass** die Kabelstecker-Schutzeinheit (55) ein im Gehäuse (56, 57) angeordnetes, in achsialer Richtung verschiebbar geführtes Verschiebeteil (71) und eine um eine Schwenkachse verschwenkbare Abdeckklappe (72) aufweist, wobei die Abdeckklappe (72) bei einer Verschiebung des Verschiebeteils (71) zwischen einer vorderen und einer hinteren Verschiebeposition zwischen einer aktiven, die Ferrule (15) mindestens eines in der Kabelstecker-Schutzeinheit (55) montierten Kabelsteckers (33) abdeckenden Lage und einer passiven, die Ferrule (15) des mindestens einen Kabelsteckers (33) freigebenden Lage verschwenkbar ist.

9. Einrichtung nach Anspruch 8, **dadurch gekennzeichnet, dass** die Abdeckklappe (72) am Verschiebeteil (71) verschwenkbar gelagert ist und zur Verschwenkung der Abdeckklappe (72) die Fixiereinheit (60) ein Betätigungselement (77) aufweist.

10. Einrichtung nach einem der Ansprüche 7 bis 9, **dadurch gekennzeichnet, dass** das mindestens eine elektrische Kontaktelement (69) in der hinteren Verschiebeposition des Verschiebeteils (71) eine Durchgangsöffnung (80) im Verschiebeteil durchsetzt und mit seinem vorderen Ende aus dieser Durchgangsöffnung (80) herausragt.

11. Einrichtung nach einem der Ansprüche 1 bis 10, **dadurch gekennzeichnet, dass** das Steckeraufnahmeteil (1) an seiner Vorderseite (37) zwei Kabelstecker-Einstecköffnungen (35) aufweist, in die die vorderen Abschnitte von zwei Kabelsteckern (33), insbesondere LC-Kabelsteckern, einsteckbar sind und in der Fixiereinheit (60) der Kabelstecker-Schutzeinheit (55) zwei Kabelstecker (33), insbesondere LC-Kabelstecker, montierbar sind, und dass die Kabelstecker-Schutzeinheit mit den darin montierten Kabelsteckern mit dem Steckeraufnahmeteil (1) zusammensteckbar ist, wobei die vorderen Abschnitte der Kabelstecker (33) zur Herstellung von zwei optischen Verbindungen in die beiden Kabelstecker-Einstecköffnungen (35) einsteckbar sind.

12. Einrichtung nach Anspruch 11, **dadurch gekennzeichnet, dass** das Steckeraufnahmeteil (1) an seiner Rückseite zwei Kabelstecker-Einstecköffnungen (36) aufweist, in welche die vorderen Abschnitte von zwei Kabelsteckern (33), insbesondere LC-Kabelsteckern, einsteckbar sind, wobei die Ferrulen (15) der Kabelstecker (33) in Ferrulen-Einstecköffnungen (52) einsteckbar sind.

13. Einrichtung nach einem der Ansprüche 1 bis 12, **dadurch gekennzeichnet, dass** das Verschiebeteil (6) des Steckeraufnahmeteils (1) und das Verschiebeteil (71) der Kabelstecker-Schutzeinheit (55) beim Zusammenstecken des Steckeraufnahmeteils (1) und der Kabelstecker-Schutzeinheit (55) mit dem mindestens einen darin montierten Kabelstecker (33) unter gegenseitiger Anlage der Verschiebeteile (6, 71) jeweils von ihrer vorderen in ihre hintere Verschiebeposition verschiebbar sind.

## Claims

1. An apparatus for the connection of an optical plug, comprising a plug-receiving part (1) which has at least at one end face representing a front end (37) of the plug-receiving part at least one cable connector insert opening (35), into which can be inserted a front portion of an optical cable connector (33), in particular an LC cable connector, which is connected to an optical cable or to an optical core of a cable, so as to establish an optical connection, and which comprises a housing (2), an insert part (4) which is inserted into the housing (2) and which has a ferrule-type insert opening (17), a slide part (6) arranged in the housing (2) and guided displaceably in an axial direction, and at least one closure flap (16) which is pivotable about a pivot axis and which by displacement of the slide part (6) upon insertion of the cable connector (33) into the cable connector insert opening (35) at the front end (37) of the plug-receiving part (1) can pivot between an active position closing the ferrule-type insert opening (17) and a passive position freeing the ferrule-type insert opening (17), **characterised in that** the apparatus further comprises a cable connector protecting unit (55) which can be mounted on the at least one optical cable connector (33) connected to the optical cable or to the optical core (97) of the cable (59), which protecting unit has a housing (56,57) and a fixing unit (60) which is inserted in the housing and in which the at least one cable connector (33) can be fixed in a position in which its front portion protrudes over the fixing unit, wherein a front portion of the housing (56,57) surrounds the front portion of the cable connector (33) protruding over the fixing unit (60), **in that** the cable connector protecting unit (55) can be assembled with the plug-receiving part (1) with the at least one cable connector (33) mounted therein, wherein to establish an optical connection the front portion of the at least one cable connector (33) can be inserted into the at least one cable connector insert opening (35) at the front end (37) of the plug-receiving part (1), **in that** to form a pull-out protection means for the cable connector (33) inserted into the plug-receiving part (1) without being mounted in the cable connector protecting unit (55) the plug-receiving part (1) has at least one first detent element (31) for engagement with a detent element (43) of the cable connector (33), and **in that** further to form a pull-out protection means for the at least one cable connector (33) mounted in the cable connector protecting unit (55) and inserted with the cable connector protecting unit (55) into the plug-receiving part (1) the plug-receiving part (1) further has at least one second detent element (87) and the cable connector protecting unit (55) has at least one detent element (86) for engagement with the second detent element (87) of the plug-receiving part (1), wherein upon mounting the cable connector protecting unit (55) on the at least one cable connector (33) the at least one detent element (43) of the cable connector (33) is rendered inoperative.

2. An apparatus according to Claim 1, **characterised in that** the fixing unit (60) retains a detent arm (42) of the cable connector in a depressed position, which has the detent elements of the cable connector (33) in the form of lugs (43).

3. An apparatus according to Claim 1 or 2, **characterised in that** radially outside the slide part (6) the plug-receiving part (1) has an insert opening (105) for the front housing portion of the cable connector protecting unit (55), which preferably is in the form of an annular gap between the slide part (6) and the housing (2).

4. An apparatus according to any one of Claims 1 to 3, **characterised in that** the plug-receiving part (1) and the cable connector protecting unit (55) each have at least one electrical contact element (53,69), which come into contact with one another upon insertion of the cable connector protecting unit (55), with the at least one cable connector (33) mounted therein, into the plug-receiving part (1) so as to form an electrical connection.

5. An apparatus according to Claim 4, **characterised in that** the at least one electrical contact element (53) of the plug-receiving part (1) is fixed in the insert part (4).

6. An apparatus according to Claim 5, **characterised in that** the at least one electrical contact element protrudes into a channel (54) of the slide part (6), wherein the slide part (6) is displaceable relative to the electrical contact element (53).

7. An apparatus according to any one of Claims 4 to 6, **characterised in that** the at least one electrical contact element (69) of the cable connector protecting unit (55) is fixed in the fixing unit (60).

8. An apparatus according to any one of Claims 1 to 7, **characterised in that** the cable connector protecting unit (55) has a slide part (71), which is arranged in the housing (56,57) and guided displaceably in an axial direction, and a cover flap (72) pivotable about a pivot axis, wherein in the event of displacement of the slide part (71) between a front and a rear displacement position the cover flap (72) can pivot between an active position covering the ferrule (15) of at least one cable connector (33) mounted in the cable connector protecting unit (55) and a passive position releasing the ferrule (15) of the at least one cable connector (33).

9. An apparatus according to Claim 8, **characterised in that** the cover flap (72) is pivotably mounted on the slide part (71) and for the pivoting of the cover flap (72) the fixing unit (60) has an actuating element (77).

10. An apparatus according to any one of Claims 7 to 9, **characterised in that**, in the rear displacement position of the slide part (7), the at least one electrical contact element (69) passes through an opening (80) in the slide part and protrudes with its front end from this opening (80).

11. An apparatus according to any one of Claims 1 to 10, **characterised in that** the plug-receiving part (1) has at its front end (37) two cable connector insert openings (35), into which can be inserted the front portions of two cable connectors (33), in particular LC cable connectors, and two cable connectors (33), in particular LC cable connectors, can be mounted in the fixing unit (60) of the cable connector protecting unit (55), and **in that** the cable connector protecting unit with the cable connectors mounted therein can be assembled with the plug-receiving part (1), wherein the front portions of the cable connectors (33) can be inserted into the two cable connector insert openings (35) so as to establish two optical connections.

12. An apparatus according to Claim 11, **characterised in that** at its rear end the plug-receiving part (1) has two cable connector insert openings (36) into which can be inserted the front portions of two cable connectors (33), in particular LC cable connectors (33), wherein the ferrules (15) of the cable connectors (33) can be inserted into ferrule insert openings (52).

13. An apparatus according to any one of Claims 1 to 12, **characterised in that** the slide part (6) of the plug-receiving part (1) and the slide part (71) of the cable connector protecting unit (55), upon assembling plug-receiving part (1) and the cable connector protecting unit (55) with the at least one cable connector (33) mounted therein, can be displaced respectively from their forward displacement position into their rear displacement position with mutual abutment of the slide parts (6,71).

## Revendications

1. Installation pour une connexion optique comprenant une pièce de réception de connecteur (1) ayant au moins sur une face frontale représentant un côté avant (37) de la pièce de réception de connecteur, au moins une ouverture d'enfichage de connecteur de câble (35) avec un segment avant d'un connecteur de câble optique (33) relié à un câble optique ou à un brin optique d'un câble, notamment un connecteur de câble LC pour réaliser une liaison optique, un insert (4) placé dans le boîtier (2) et qui comporte un orifice d'enfichage (17) de férules, une pièce coulissante (6) guidée de manière coulissante dans la direction axiale et logée dans le boîtier (2) et au moins un volet de fermeture (16) pivotant autour d'un axe de pivotement, et qui pivote par coulissement de la pièce coulissante (6) lors de l'enfichage du connecteur de câble (33) dans l'ouverture d'enfichage de connecteur de câble (35) de la face avant (37) de la pièce de réception de connecteur (1), entre une position active fermant l'orifice d'enfichage de férules (17) et une position passive libérant l'orifice d'enfichage de férules (17),
**caractérisée en ce que**
* l'installation comprend en outre une unité de protection de connecteur de câble (55) montée sur un connecteur de câble optique (33) relié au moins au câble optique ou au brin optique (97) du câble (59),
* cette unité de protection de connecteur de câble comportant un boîtier (56, 57) et une unité de fixation (60) qui se place dans le boîtier, et dans laquelle peut être fixé au moins un connecteur de câble (33) dans une position dans laquelle son segment avant dépasse de l'unité de fixation,
* un segment avant du boîtier (56, 57) entoure le segment de connecteur de câble (33), avant, qui dépasse de l'unité de fixation (60),
* l'unité de protection de connecteur de câble (55) pouvant être réunie à au moins un connecteur de câble (33) monté dans celle-ci avec la pièce de réception de connecteur (1),
* le segment avant d'au moins un connecteur de câble (33) pouvant être enfiché dans au moins une ouverture d'enfichage (35) de connecteur de câble de la face avant (37) de la pièce de réception de connecteur pour réaliser une liaison optique,
* la pièce de réception de connecteur (1) comporte au moins un premier élément d'accrochage (31) pour être accroché à un premier élément d'accrochage (43) du connecteur de câble (33), pour réaliser une protection contre l'extraction pour le connecteur de câble (33) enfiché sans un montage dans l'unité de protection de connecteur de câble (55) dans la pièce de réception de connecteur (1), et
* en outre, au moins un second élément d'accrochage (87) et l'unité de protection de connecteur de câble (55), comportent au moins un élément d'accrochage (86) pour être accroché au second élément d'accrochage (87) de la pièce de réception de connecteur (1), pour réaliser une protection contre l'extraction d'au moins un connecteur de câble (33) monté dans l'unité de protection de connecteur de câble (55) et engagé avec l'unité de protection de connecteur de câble (55) dans la pièce de réception de connecteur (1),
* au moins un élément d'accrochage (43) du connecteur de câble (33), est mis hors service lors du montage de l'unité de protection de connecteur de câble (55) sur au moins un connecteur de câble (33).

2. Installation selon la revendication (1),
**caractérisée en ce que**
en position enfoncée l'unité de fixation (60) maintient un bras d'accrochage (42) du connecteur de câble comportant des éléments d'accrochage en forme de becs (43) du connecteur de câble (33).

3. Installation selon la revendication 1 ou 2,
**caractérisée en ce que**
la pièce de réception de connecteur (1) comporte radialement à l'extérieur de la pièce coulissante (6), un orifice d'enfichage (105) pour un segment de boîtier avant de l'unité de protection de connecteur de câble (55), et qui est réalisé de préférence comme intervalle annulaire entre la pièce coulissante (6) et le boîtier (2).

4. Installation selon l'une des revendications 1 à 3,
**caractérisée en ce que**
la pièce de réception de connecteur (1) et l'unité de protection de connecteur de câble (55), ont chacune au moins un élément de contact électrique (53, 69) qui arrive en contact pour former une liaison électrique, lors de l'enfichage de l'unité de protection de connecteur de câble (55) avec au moins un connecteur de câble (33) monté dans la pièce de réception de connecteur (1).

5. Installation selon la revendication 4,
**caractérisée en ce qu'**
au moins un élément de contact électrique (53) de la pièce de réception de connecteur (1) est fixé dans la pièce d'insertion (4).

6. Installation selon la revendication 5,
**caractérisée en ce qu'**
au moins un élément de contact électrique vient en saillie dans un canal (54) de la pièce coulissante (6),
la pièce coulissante (6) pouvant coulisser par rapport à l'élément de contact électrique (53).

7. Installation selon l'une des revendications 4 à 6,
**caractérisée en ce qu'**
au moins un élément de contact électrique (69) de l'unité de protection de connecteur de câble (55) est bloqué dans l'unité de fixation (60).

8. Installation selon l'une des revendications 1 à 7,
**caractérisée en ce que**
l'unité de protection de connecteur de câble (55) comporte une pièce coulissante (71) logée dans le boîtier (56, 57), guidée en coulissement dans la direction axiale et un volet de recouvrement (72) pivotant autour d'un axe de pivotement,
lors du coulissement de la pièce coulissante (71), le volet de recouvrement (72) pivotant entre une position de coulissement avant et une position de coulissement arrière entre une position active couvrant la férule (15) au moins d'un connecteur de câble (33) monté dans l'unité de protection de connecteur de câble (55) et une position passive libérant la férule (15) d'au moins un connecteur de câble (33).

9. Installation selon la revendication 8,
**caractérisée en ce que**
le volet de recouvrement (72) est monté pivotant sur la pièce coulissante (71) et pour pivoter le volet de recouvrement (72), l'unité de fixation (60) comporte un élément d'actionnement (77).

10. Installation selon l'une des revendications 7 à 9,
**caractérisée en ce qu'**
au moins un élément de contact électrique (69) traverse, dans la position de coulissement arrière de la pièce coulissante (71), un orifice de passage (80) de la pièce coulissante et dépasse par son extrémité avant de cet orifice traversant (80).

11. Installation selon l'une des revendications 1 à 10,
**caractérisée en ce que**
sur son côté avant (37), la pièce de réception de connecteur (1), comporte deux orifices d'enfichage de connecteur de câble (35) dans lesquels peuvent s'enficher les segments avant de deux connecteurs de câble (33), notamment deux connecteurs LC, et l'unité de fixation (60) de l'unité de protection de connecteur de câble (55), peut recevoir deux connecteurs de câble (33), notamment des connecteurs de câble LC, et
* l'unité de protection de connecteur de câble munie des connecteurs de câble montés peut être assemblée à la pièce de réception de connecteur (1),
* les segments avant des connecteurs de câble (33), pouvant être enfichés dans les deux orifices d'enfichage de connecteur de câble (35), pour réaliser deux liaisons optiques.

12. Installation selon la revendication 11,
**caractérisée en ce que**
la pièce de réception de connecteur (1) comporte sur son côté arrière, deux orifices d'enfichage de connecteur de câble (36) dans lesquels peuvent s'enficher les segments avant de deux connecteurs de câble (33), notamment des connecteurs de câble LC,
* les férules (15) des connecteurs de câble (33) s'enfichant dans des orifices d'enfichage de férules (52).

13. Installation selon l'une des revendications 1 à 12,
**caractérisée en ce que**
la pièce coulissante (6) de la pièce de réception de connecteur (1) et la pièce coulissante (71) de l'unité de protection de connecteur de câble (55), lors de la connexion de la pièce de réception de connecteur (1) et de l'unité de protection de connecteur de câble (55), sont coulissantes avec au moins un connecteur de câble (33) monté avec appui réciproque des pièces coulissantes (6, 71) chaque fois de leur position avant vers leur position arrière de coulissement.
